(19) Europäisches Patentamt
European Patent Office
Office européen des brevets

(11) **EP 4 199 150 A1**

(12) **EUROPÄISCHE PATENTANMELDUNG**

(43) Veröffentlichungstag:
**21.06.2023 Patentblatt 2023/25**

(21) Anmeldenummer: **21215537.8**

(22) Anmeldetag: **17.12.2021**

(51) Internationale Patentklassifikation (IPC):
***H01M 4/38*** (2006.01) ***H01M 4/66*** (2006.01)
***H01M 10/052*** (2010.01) ***H01M 10/0563*** (2010.01)
***H01M 10/0568*** (2010.01) ***H01M 50/417*** (2021.01)
***H01M 50/449*** (2021.01) *H01M 4/74* (2006.01)
*H01M 4/80* (2006.01) *H01M 10/054* (2010.01)
*H01M 10/44* (2006.01)

(52) Gemeinsame Patentklassifikation (CPC):
**H01M 4/382; H01M 4/667; H01M 4/668; H01M 10/052; H01M 10/0563; H01M 10/0568; H01M 50/417; H01M 50/449;** H01M 4/38; H01M 4/381; H01M 4/661; H01M 4/745; H01M 4/808; H01M 10/054; H01M 10/446; (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Innolith Technology AG**
**4052 Basel (CH)**

(72) Erfinder:
- **ZINCK, Laurent**
  **67470 Mothern (FR)**
- **Borck, Markus**
  **70567 Stuttgart (DE)**
- **Wollfarth, Claudia**
  **76227 Karlsruhe (DE)**
- **Thümmel, Julia**
  **76646 Bruchsal (DE)**

(74) Vertreter: **LBP Lemcke, Brommer & Partner Patentanwälte mbB**
**Siegfried-Kühn-Straße 4**
**76135 Karlsruhe (DE)**

(54) **WIEDERAUFLADBARE BATTERIEZELLE**

(57) Die Erfindung betrifft eine wiederaufladbare Batteriezelle (20, 40, 101), enthaltend ein aktives Metall, zumindest eine positive Elektrode (23, 44) mit einem Ableitelement (26), zumindest eine negative Elektrode (22, 45) mit einem Ableitelement (27), zumindest ein Separatorelement (21), ein Gehäuse (28, 102) und einen Elektrolyten, wobei der Elektrolyt auf $SO_2$ basiert und zumindest ein erstes Leitsalz enthält, welches die Formel (I)

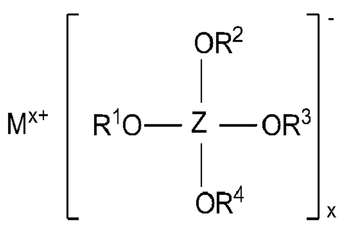

Formel (I)

aufweist, wobei M ein Metall ist, das ausgewählt ist aus der Gruppe bestehend aus Alkalimetallen, Erdalkalimetallen, Metallen der Gruppe 12 des Periodensystems der Elemente und Aluminium; x eine ganze Zahl von 1 bis 3 ist; die Substituenten $R^1$, $R^2$, $R^3$ und $R^4$ unabhängig voneinander ausgewählt sind aus der Gruppe bestehend aus $C_1$-$C_{10}$ Alkyl, $C_2$-$C_{10}$ Alkenyl, $C_2$-$C_{10}$ Alkinyl, $C_3$-$C_{10}$ Cycloalkyl, $C_6$-$C_{14}$ Aryl und $C_5$-$C_{14}$ Heteroaryl, wobei die aliphatischen, cyclischen, aromatischen und heteroaromatischen Gruppen unsubstituiert oder substituiert sein können; Z Aluminium oder Bor ist; und mindestens zwei der Substituenten $R^1$, $R^2$, $R^3$ und $R^4$ gemeinsam einen Chelatliganden bilden können, der an Z koordiniert ist. Die negative Elektrode (22, 45, 101) enthält zumindest im geladenen Zustand der wiederaufladbaren Batteriezelle das aktive Metall in metallischer Form; und wobei innerhalb des Gehäuses (28) ein Raum zur Aufnahme des beim Laden abgeschiedenen aktiven Metalls angeordnet ist, der durch eine komprimierbare Struktur (50, 52) gebildet ist, die durch das abgeschiedene aktive Metall komprimiert wird.

EP 4 199 150 A1

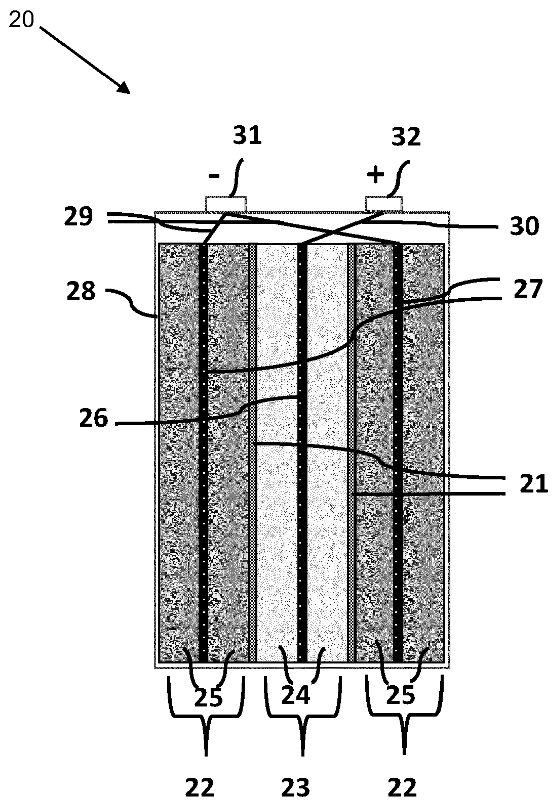


FIG. 1

(52) Gemeinsame Patentklassifikation (CPC): (Forts.)
H01M 2300/002

## Beschreibung

Die Erfindung betrifft eine wiederaufladbare Batteriezelle mit einer komprimierbaren Struktur.

Wiederaufladbare Batteriezellen sind auf vielen technischen Gebieten von großer Bedeutung. Vielfach werden sie für Anwendungen eingesetzt, bei denen nur kleine wiederaufladbare Batteriezellen mit relativ geringen Stromstärken benötigt werden, wie beispielsweise beim Betrieb von Mobiltelefonen. Daneben gibt es aber auch einen großen Bedarf an größeren wiederaufladbaren Batteriezellen für Hochenergieanwendungen, wobei eine Massenspeicherung von Energie in Form von Batteriezellen für den elektrischen Antrieb von Fahrzeugen von besonderer Bedeutung ist.

Eine wichtige Anforderung bei derartigen wiederaufladbaren Batteriezellen ist eine hohe Energiedichte. Das bedeutet, dass die wiederaufladbare Batteriezelle möglichst viel elektrische Energie je Gewichts- und Volumeneinheit enthalten soll. Hierfür hat sich Lithium als aktives Metall als besonders vorteilhaft erwiesen.

Als aktives Metall einer wiederaufladbaren Batteriezelle bezeichnet man das Metall, dessen Ionen innerhalb des Elektrolyten beim Laden oder Entladen der Zelle zur negativen oder positiven Elektrode wandern und dort an elektrochemischen Prozessen teilnehmen. Wiederaufladbare Batteriezellen, das aktive Metall in metallischer Form enthalten, werden als Metall-Zellen bezeichnet. Metalle, die in metallischer Form in einer Batteriezelle enthalten sein können, sind beispielsweise Alkalimetalle, insbesondere Lithium oder Natrium, Erdalkalimetalle, insbesondere Calcium, Metalle der Gruppe 12 des Periodensystems, insbesondere Zink oder Aluminium. Wiederaufladbare Batteriezellen, welche metallisches Lithium oder metallisches Natrium als aktives Material der negativen Elektrode enthalten, werden dann als Lithium-Zellen bzw. Natrium-Zellen bezeichnet.

Die positiven Elektroden der aus dem Stand der Technik bekannten Metall-Zellen sind als Insertionselektroden ausgebildet. Unter dem Begriff "Insertionselektrode" im Sinne der vorliegenden Erfindung werden Elektroden verstanden, welche eine Kristallstruktur besitzen, in die Ionen des aktiven Metalls beim Betrieb der Metall-Zelle ein- und ausgelagert werden können. Das bedeutet, dass sich die Elektrodenprozesse nicht nur an der Oberfläche der Elektrode, sondern auch innerhalb der Kristallstruktur abspielen können. Die positive Elektrode besteht zum Beispiel aus Lithiumkobaltoxid ($LiCoO_2$). Beim Laden der Lithium-Zelle werden die Ionen des aktiven Metalls aus der positiven Elektrode ausgelagert und an der negativen Elektrode als metallisches Lithium abgeschieden. Beim Entladen der Lithium-Zelle läuft der umgekehrte Prozess ab.

Auch der Elektrolyt ist ein wichtiges Funktionselement jeder wiederaufladbaren Batteriezelle. Er enthält meistens ein Lösungsmittel oder ein Lösungsmittelgemisch und mindestens ein Leitsalz. Feststoffelektrolyte oder ionische Flüssigkeiten enthalten zum Beispiel kein Lösungsmittel, sondern nur das Leitsalz. Der Elektrolyt steht mit der positiven und der negativen Elektrode der Batteriezelle in Kontakt. Mindestens ein Ion des Leitsalzes (Anion oder Kation) ist in dem Elektrolyten derartig beweglich, dass durch Ionenleitung ein für die Funktion der wiederaufladbaren Batteriezelle erforderlicher Ladungstransport zwischen den Elektroden stattfinden kann. Der Elektrolyt wird ab einer bestimmten oberen Zellspannung der wiederaufladbaren Batteriezelle oxidativ elektrochemisch zersetzt. Dieser Vorgang führt oft zu einer irreversiblen Zerstörung von Bestandteilen des Elektrolyten und damit zu einem Ausfall der wiederaufladbaren Batteriezelle. Auch reduktive Prozesse können den Elektrolyten ab einer bestimmten unteren Zellspannung zersetzen. Um diese Prozesse zu vermeiden, werden die positive und die negative Elektrode derart gewählt, dass die Zellspannung unter- bzw. oberhalb der Zersetzungsspannung des Elektrolyten liegt. Der Elektrolyt bestimmt somit das Spannungsfenster (in Engl.: voltage window), in dessen Bereich eine wiederaufladbare Batteriezelle reversibel betrieben, das heißt (d.h.) wiederholt aufgeladen und entladen werden kann.

Die aus dem Stand der Technik bekannten Lithium-Zellen oder Natrium-Zellen enthalten einen Elektrolyten, der aus einem organischen Lösungsmittel oder Lösungsmittelgemisch und einem darin gelösten Leitsalz besteht. Bei dem Leitsalz handelt es sich um ein Lithiumsalz wie beispielsweise Lithiumhexafluorophosphat ($LiPF_6$) oder um ein Natriumsalz wie beispielsweise Natriumhexafluorophosphat ($NaPF_6$). Das Lösungsmittelgemisch kann beispielsweise Ethylencarbonat enthalten. Der Elektrolyt LP57, der die Zusammensetzung 1 M $LiPF_6$ in EC (Ethylencarbonat):EMC (Ethylmethylcarbonat) 3:7 aufweist, ist ein Beispiel für einen solchen Elektrolyten. Aufgrund des organischen Lösungsmittels oder Lösungsmittelgemischs werden derartige Batteriezellen auch als organische Batteriezellen bezeichnet.

Neben dem im Stand der Technik häufig verwendeten Lithiumhexafluorophosphat ($LiPF_6$) als Leitsalz werden auch andere Leitsalze für organische Lithium-Ionen-Zellen beschrieben. So beschreibt zum Beispiel das Dokument JP 4 306 858 B2 (im Nachfolgenden bezeichnet als [V1]) Leitsalze in Form von Tetraalkoxy- oder Tetraaryloxyboratsalzen, die fluoriert oder teilfluoriert sein können.

Die JP 2001 143750 A (im Nachfolgenden bezeichnet als [V2]) berichtet von fluorierten oder teilfluorierten Tetraalkoxyboratsalzen und Tetraalkoxyaluminatsalzen als Leitsalze. In beiden Dokumenten [V1] und [V2] werden die beschriebenen Leitsalze in organischen Lösungsmitteln oder Lösungsmittelgemischen gelöst und in organische Lithium-Ionen-Zellen eingesetzt.

Batteriezellen mit Elektrolyten auf der Basis organischer Lösungsmittel sind jedoch sehr sensitiv was das Überladen anbelangt. Das ungewollte Überladen, also eine Steigerung der Spannung über die maximale Zellenspannung, von organischen Batteriezellen führt zu einer irreversiblen oxidativen und reduktiven Zersetzung von Elektrolytkomponenten und wirkt sich somit schädlich auf die Lebensdauer der Batteriezelle aus. Dabei findet die oxidative Zersetzung des organischen Lösungsmittels und/oder des Leitsalzes an der Oberfläche der positiven Elektrode statt. Die während dieser Zersetzung gebildete Reaktionswärme und die dabei entstehenden gasförmigen Produkte sind für den darauffolgenden, sogenannten "Thermal Runaway" (englisch für "thermisches Durchgehen") und die dadurch resultierende Zerstörung der organischen Batteriezelle verantwortlich. Die überwiegende Mehrheit an Ladeprotokollen z. B. für organische Lithium-Zellen zieht die Zellspannung als Indikator für das Ladeende heran. Hierbei sind Unfälle durch den Thermal Runaway besonders wahrscheinlich bei der Verwendung von Multizellen-Batteriepacks, in denen mehrere organische Lithium-Zellen mit nicht übereinstimmenden Kapazitäten in Reihe geschaltet werden.

Die reduktive Zersetzung des organischen Elektrolyten einer organischen Batteriezelle findet an der negativen Elektrode statt und ist ebenfalls irreversibel.

Keine organischen Lösungsmittel sind thermodynamisch stabil z.B. gegenüber Lithium oder Natrium, welches in Kohlenstoff gespeichert ist. Viele Lösungsmittel bilden jedoch einen Passivierungsfilm auf der Elektrodenoberfläche der negativen Elektrode. Dieser Film trennt das Lösungsmittel räumlich von der Elektrode, ist aber ionisch leitfähig und ermöglicht so den Durchgang von Lithium-Ionen oder Natrium-Ionen. Der Passivierungsfilm, die so genannte "**S**olid **E**lectrolyte **I**nterphase" (SEI), verleiht dem System Stabilität, wodurch die Herstellung von z.B. Lithium-Zellen oder Natrium-Zellen ermöglicht wird. Bei der Bildung der SEI wird Lithium oder Natrium in den Passivierungsfilm integriert. Dieser Prozess ist irreversibel und wird daher als Kapazitätsverlust beobachtet. Deshalb sind organische Metall-Zellen problematisch hinsichtlich ihrer Stabilität sowie langfristigen Betriebssicherheit. Sicherheitsrisiken werden insbesondere auch durch die Brennbarkeit des organischen Lösungsmittels oder Lösungsmittelgemischs verursacht. Wenn eine organische Metall-Zelle Feuer fängt oder sogar explodiert, bildet das metallische aktive Metall eine hochreaktive Substanz und das organische Lösungsmittel des Elektrolyten ein brennbares Material. Um solche Sicherheitsrisiken zu vermeiden, müssen zusätzliche Maßnahmen getroffen werden. Die zusätzlichen Maßnahmen werden jedoch bei einer möglichen Vermarktung als nachteilig bewertet.

Eine aus dem Stand der Technik bekannte Weiterentwicklung sieht die Verwendung eines Elektrolyten auf Schwefeldioxid ($SO_2$)-Basis anstatt eines organischen Elektrolyten für wiederaufladbare Batteriezellen vor. Wiederaufladbare Batteriezellen, welche einen auf $SO_2$-basierenden Elektrolyten enthalten, weisen unter anderem eine hohe ionische Leitfähigkeit auf. Unter dem Begriff "auf $SO_2$-basierender Elektrolyt" ist ein Elektrolyt zu verstehen, der $SO_2$ nicht nur als Zusatz in geringer Konzentration enthält, sondern bei dem die Beweglichkeit der Ionen des Leitsalzes, das in dem Elektrolyten enthalten ist und den Ladungstransport bewirkt, zumindest teilweise, größtenteils oder sogar vollständig durch $SO_2$ gewährleistet ist. Das $SO_2$ dient also als Lösungsmittel für das Leitsalz. Das Leitsalz kann mit dem gasförmigen $SO_2$ einen flüssigen Solvatkomplex bilden, wobei das $SO_2$ gebunden und der Dampfdruck gegenüber dem reinen $SO_2$ gesenkt werden kann. Dann entstehen Elektrolyte mit niederem Dampfdruck. Derartige Elektrolyten auf $SO_2$-Basis haben im Vergleich zu den zuvor beschriebenen organischen Elektrolyten den Vorteil der Nichtbrennbarkeit. Sicherheitsrisiken, welche durch die Brennbarkeit des Elektrolyten bestehen, können dadurch ausgeschlossen werden.

Zusätzlich zu den oben genannten Nachteilen der organischen Batteriezellen bringt die Verwendung von metallischem aktivem Metall der negativen Elektrode in wiederaufladbaren Metall-Zellen ebenfalls weitere Probleme mit sich. Zum einen scheidet sich das aktive Metall beim Laden nicht uniform, sondern in Form von Dendriten ab. Das unkontrollierbare Dendriten-Wachstum führt zu einer Ansammlung eines höchst reaktiven Metalls mit einer großen Oberfläche und kann zu sicherheitskritischen Zuständen führen. Zum anderen, bedingt die thermodynamische Instabilität von zum Beispiel metallischem Lithium oder metallischem Natrium irreversible und kontinuierliche Reaktionen zwischen diesen und dem Elektrolyten. Beispielsweise entstehen in Lithium-Zellen deshalb ungewollt dicke Passivierungs-Schichten (SEI) auf der Lithium-Metall-Oberfläche, die Lithium und Elektrolytbestandteile verbrauchen. Beim wiederholten Laden und Entladen können große volumetrische und morphologische Veränderungen in der Lithium-Metallanode auftreten. Die oben genannten SEI-Filme sind zu instabil, um solche signifikanten Änderungen vollständig zu unterdrücken. Der Innenwiderstand erhöht sich dadurch und die Lebensdauer der wiederaufladbaren Lithium-Batteriezelle wird verkürzt.

Auch die Volumenzunahme innerhalb einer Metall-Zelle durch die Abscheidung von festem aktivem Metall aus den zuvor gelösten Ionen beim Laden kann zu Spannungen und Druckerhöhungen innerhalb des Gehäuses führen. Die Elektroden, der Separator oder sogar das Gehäuse selbst können dadurch beschädigt werden.

Die benannten Nachteile und Probleme sind gravierend und es wird heutzutage sowohl bei den organischen Metall-Zellen als auch bei den Metall-Zellen mit einem auf $SO_2$-basierenden Elektrolyten nach Lösungen dieser Probleme in Zusammenhang mit einer metallischen Anode geforscht und gesucht, wie es beispielsweise aus folgenden Dokumenten hervorgeht.

Die Autoren des Dokuments [V3] ("Dendrite-Free Lithium Deposition Induced by Uniformly Distributed Lithium Ions for Efficient Lithium Metal Batteries" Cheng et al, Adv. Mater. 2016, 28, 2888-2895) berichten von einer Lithium-Metall-Batterie mit einem organischen Elektrolyten. Um eine dendritenfreie Lithium-Metallanode zu erhalten, verwenden Sie ein 3D-Glasfaser-Gewebe mit einer großen Anzahl polarer Gruppen zur Abscheidung von Lithium.

Die Autoren des Dokuments [V4] ("Design Strategies to Enable the Efficient Use of Sodium Metal Anodes in

High-Energy Batteries" Sun et al,; Adv. Mater. 2020, 32, 1903891) beschreiben verschiedene Methoden zur Verhinderung der dendritischen Abscheidung von Natrium in organischen Natrium-Zellen, wie beispielsweise die geeignete Anpassung von Flüssigelektrolyten, von Festkörper-Elektrolyten oder des Na Metall-Anoden/Elektrolyt-Interface. Sie berichten ebenfalls von nanostrukturierten Natriummetallanoden.

Die Autoren Oh et al. des Artikels aus dem JOURNAL OF POWER SOURCES, Bd. 68, Nr. 2, 1. Oktober 1997 (1997-10-01), Seiten 338-343 (bezeichnet als [V5]) berichten über eine wiederaufladbare Lithiummetallzelle mit der Kombination $Li/Li_xCoO_2$ und mit einem $LiAlCl_4$ • 3 $SO_2$ Elektrolyt. Zur Verhinderung der Degradation der Lithiummetall-Elektrode schlagen die Autoren die Zugabe von kleinen Mengen an $LiPF_6$ zum Elektrolyten vor.

In der US 7,901,811 B2 (im Nachfolgenden bezeichnet als [V6]) wird eine Lithium-Metall-zelle mit einem auf $SO_2$-basierenden Elektrolyten mit dem Leitsalz Lithiumtetrachloroaluminat ($LiAlCl_4$) beschrieben. Um die Nachteile der dendritischen Abscheidung zu vermeiden, wird eine aus Feststoffpartikeln gebildete poröse Struktur vorgeschlagen, die so ausgebildet und angeordnet ist, dass das beim Laden der Lithium-Metallzelle abgeschiedene Lithium von der Oberfläche des Ableiters in die Poren der porösen Struktur eindringt und dort weiter abgeschieden wird.

Neben den in $SO_2$-Elektrolyten gebräuchlichen Alkali-Tetrachloroaluminat-Leitsalzen (z.B. $LiAlCl_4$ * $xSO_2$ oder $NaAlCl_4$ * $xSO_2$) offenbart die WO 2021/019047 A1 (im Nachfolgenden bezeichnet als [V6]) eine neue Gruppe von Leitsalzen für auf $SO_2$-basierende Elektrolyten. Diese Leitsalze bestehen aus einem Anion mit vier substituierten Hydroxygruppen gruppiert um das Zentralatom Bor oder Aluminium und einem Kation, bestehend aus dem aktiven Metall der Zelle. [V7] berichtet zudem von einer homogenen Lithiumabscheidung in $SO_2$-basierenden Elektrolyten mit diesen Leitsalzen.

Die aus dem Stand der Technik bekannten Lösungen sind jedoch nicht ausreichend, um alle genannten Probleme zu überwinden. Somit liegt die der vorliegenden Erfindung zugrunde liegende Aufgabe eine wiederaufladbare Batteriezelle mit einem auf $SO_2$-basierenden Elektrolyten bereitzustellen, die verbesserte elektrische Leistungsdaten, insbesondere eine hohe Energiedichte aufweist und

- eine möglichst uniforme Abscheidung von metallischem aktivem Metall ermöglicht;
- keine Druckerhöhung bei der Abscheidung von aktivem Metall innerhalb des Batteriegehäuses aufweist;
- eine stabile Deckschicht auf der negativen Elektrode aufweist, wobei die Deckschichtkapazität niedrig sein sollte und im weiteren Betrieb keine weitere reduktive Elektrolytzersetzung an der negativen Elektrode auftritt;
- gegen verschiedene Missbräuche, wie elektrische, mechanische oder thermische, robust ist;
- ein breites elektrochemisches Fenster hat, sodass keine oxidative Elektrolytzersetzung an der positiven Elektrode auftritt;
- eine verbesserte Überladefähigkeit und Tiefentladefähigkeit und eine geringere Selbstentladung aufweist; und
- eine gesteigerte Lebensdauer, insbesondere eine hohe Zahl nutzbarer Lade- und Entladezyklen zeigt.

Derartige wiederaufladbare Batteriezellen sollen insbesondere auch sehr gute elektrische Energie- und Leistungsdaten, eine hohe Betriebssicherheit und Lebensdauer, insbesondere eine hohe Zahl nutzbarer Lade- und Entladezyklen besitzen, ohne dass sich hierbei der Elektrolyt im Betrieb der wiederaufladbaren Batteriezelle zersetzt.

Die der vorliegenden Erfindung zugrunde liegenden Aufgabe wurde überraschenderweise durch eine wiederaufladbare Batteriezelle mit den Merkmalen des Anspruchs 1 gelöst. Die Ansprüche 2 bis 20 beschreiben vorteilhafte Weiterbildungen der erfindungsgemäßen wiederaufladbaren Batteriezelle. Weitere vorteilhafte Weiterbildungen der erfindungsgemäßen wiederaufladbaren Batteriezelle sind der Beschreibung, den Beispielen und den Zeichnungen zu entnehmen.

Eine erfindungsgemäße Wiederaufladbare Batteriezelle enthält ein aktives Metall, zumindest eine positive Elektrode mit einem Ableitelement, zumindest eine negative Elektrode mit einem Ableitelement, zumindest ein Separatorelement, ein Gehäuse und einen Elektrolyten, wobei der Elektrolyt auf $SO_2$ basiert und zumindest ein erstes Leitsalz enthält, welches die Formel (I)

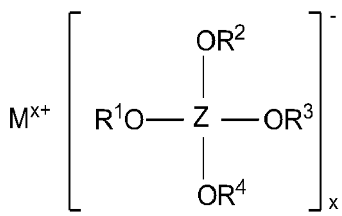

Formel (I)

aufweist. M ist ein Metall, das ausgewählt ist aus der Gruppe bestehend aus Alkalimetallen, Erdalkalimetallen, Metallen

der Gruppe 12 des Periodensystems der Elemente und Aluminium; x ist eine ganze Zahl von 1 bis 3 ist. Die Substituenten $R^1$, $R^2$, $R^3$ und $R^4$ sind unabhängig voneinander aus der Gruppe bestehend aus $C_1$-$C_{10}$ Alkyl, $C_2$-$C_{10}$ Alkenyl, $C_2$-$C_{10}$ Alkinyl, $C_3$-$C_{10}$ Cycloalkyl, $C_6$-$C_{14}$ Aryl und $C_5$-$C_{14}$ Heteroaryl, wobei die aliphatischen, cyclischen, aromatischen und heteroaromatischen Gruppen unsubstituiert oder substituiert sein können. Z ist entweder Aluminium oder Bor ist. Mindestens zwei der Substituenten $R^1$, $R^2$, $R^3$ und $R^4$ können gemeinsam einen Chelatliganden bilden, der an Z koordiniert ist. Ferner enthält die negative Elektrode zumindest im geladenen Zustand der wiederaufladbaren Batteriezelle das aktive Metall in metallischer Form. Darüber hinaus ist innerhalb des Gehäuses ein Raum zur Aufnahme des beim Laden abgeschiedenen aktiven Metalls angeordnet, der durch eine komprimierbare Struktur gebildet ist, die durch das abgeschiedene aktive Metall komprimiert wird.

Der in der erfindungsgemäßen wiederaufladbaren Batteriezelle verwendete auf $SO_2$-basierende Elektrolyt enthält $SO_2$ nicht nur als Zusatz in geringer Konzentration, sondern in Konzentrationen, bei denen die Beweglichkeit der Ionen des ersten Leitsalzes, das in dem Elektrolyten enthalten ist und den Ladungstransport bewirkt, zumindest teilweise, größtenteils oder sogar vollständig durch das $SO_2$ gewährleistet ist. Das erste Leitsalz ist in dem Elektrolyten gelöst und zeigt darin eine sehr gute Löslichkeit. Es kann mit dem gasförmigen $SO_2$ einen flüssigen Solvatkomplex bilden, in welchem das $SO_2$ gebunden wird. In diesem Fall sinkt der Dampfdruck des flüssigen Solvatkomplexes gegenüber dem reinen $SO_2$ deutlich und es entstehen Elektrolyte mit niederem Dampfdruck. Es liegt jedoch auch im Rahmen der Erfindung, dass es bei der Herstellung des erfindungsgemäßen Elektrolyten, je nachdem welche chemische Struktur das erste Leitsalz nach Formel (I) hat, zu keiner Dampfdruckerniedrigung kommen kann. Im letztgenannten Fall ist es bevorzugt, dass bei der Herstellung des erfindungsgemäßen Elektrolyten bei Tieftemperatur oder unter Druck gearbeitet wird. Der Elektrolyt kann auch mehrere Leitsalze der Formel (I) enthalten, welche in ihrer chemischen Struktur voneinander abweichen.

Der Begriff "$C_1$-$C_{10}$ Alkyl" umfasst im Sinne der vorliegenden Erfindung lineare oder verzweigte gesättigte Kohlenwasserstoffgruppen mit einem bis zehn Kohlenstoffatomen. Hierunter fallen insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl, iso-Hexyl, 2-Ethylhexyl, n-Heptyl, iso-Heptyl, n-Octyl, iso-Octyl, n-Nonyl, n-Decyl und dergleichen.

Der Begriff "$C_2$-$C_{10}$ Alkenyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl, 1-Hexenyl, 1-Heptenyl, 1-Octenyl, 1-Nonenyl, 1- Decenyl und dergleichen.

Der Begriff "$C_2$-$C_{10}$ Alkinyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Dreifachbindung aufweisen. Hierunter fallen insbesondere Ethinyl, 1-Propinyl, 2- Propinyl, 1-n-Butinyl, 2-n-Butinyl, iso-Butinyl, 1-Pentinyl, 1- Hexinyl, 1-Heptinyl, 1-Octinyl, 1-Noninyl, 1- Decinyl und dergleichen.

Der Begriff "$C_3$-$C_{10}$ Cycloalkyl" umfasst im Sinne der vorliegenden Erfindung zyklische, gesättigte Kohlenwasserstoffgruppen mit drei bis zehn Kohlenstoffatomen. Hierunter fallen insbesondere Cyclopropyl, Cyclobutyl, Cyclopentyl, Cyclohexyl, Cycloheptyl, Cyclohexyl, Cyclononyl und Cyclodecanyl.

Der Begriff "$C_6$-$C_{14}$ Aryl" umfasst im Sinne der vorliegenden Erfindung aromatische Kohlenwasserstoffgruppen mit sechs bis vierzehn ringständigen Kohlenstoffatomen. Hierunter fallen insbesondere Phenyl ($C_6H_5$ Gruppe), Naphthyl ($C_{10}H_7$ Gruppe) und Anthracyl ($C_{14}H_9$ Gruppe).

Der Begriff "$C_5$-$C_{14}$ Heteroaryl" umfasst im Sinne der vorliegenden Erfindung aromatische Kohlenwasserstoffgruppen mit fünf bis vierzehn ringständigen Kohlenwasserstoffatomen, bei welchen zumindest ein Kohlenwasserstoff-Atom durch ein Stickstoff-, Sauerstoff- oder Schwefel-Atom ersetzt bzw. ausgetauscht ist. Hierunter fallen insbesondere Pyrrolyl, Furanyl, Thiophenyl, Pyrridinyl, Pyranyl, Thiopyranyl und dergleichen. Alle der vorgenannten Kohlenwasserstoffgruppen sind jeweils über das Sauerstoff-Atom an Zentralatom gemäß Formel (I) gebunden.

Bei allen bereits erwähnten Definitionen der Begriffe ist es ebenfalls im Sinne der vorliegenden Erfindung, dass die aliphatischen, cyclischen, aromatischen und heteroaromatischen Resten/Gruppen unsubstituiert oder substituiert sein können. Bei der Substitution wird ein Wasserstoffatom oder mehrere Wasserstoffatome der aliphatischen, cyclischen, aromatischen und heteroaromatischen Resten/Gruppen durch jeweils ein Atom, wie beispielsweise Fluor oder Chlor, oder eine chemische Gruppe, wie beispielsweise $CF_3$, ersetzt.

Unter der Formulierung "Chelatligand, der mindestens von zwei der Substituenten $R^1$, $R^2$, $R^3$ und $R^4$ gemeinsam gebildet wird und an Z koordiniert ist" ist im Sinne der vorliegenden Erfindung zu verstehen, dass zumindest zwei der Substituenten $R^1$, $R^2$, $R^3$ und $R^4$ untereinander verbrückt sein können, wobei diese Verbrückung von zwei Substituenten zu der Bildung eines zweizähnigen Chelatliganden führt. Solche Chelatliganden können beispielsweise die folgenden Strukturformeln aufweisen:

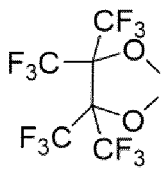

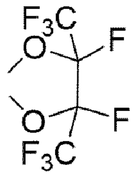

Der Chelatligand koordiniert an das Zentralatom Z unter Bildung eines Chelatkomplexes. Im Fall des zweizähnigen Chelatliganden koordinieren die beiden Sauerstoffatome an das Zentralatom Z. Synthetisch können solche Chelatkomplexe wie in dem nachfolgend beschriebenen Beispiel 1 hergestellt werden. Die Bezeichnung "Chelatkomplex" steht für Komplexverbindungen, bei denen ein mehrzähniger Ligand (besitzt mehr als ein freies Elektronenpaar) mindestens zwei Koordinationsstellen (Bindungsstellen) des Zentralatoms einnimmt. Der Chelatligand kann auch mehrzähnig ausgebildet sein, wenn drei oder vier der Substituenten $R^1$, $R^2$, $R^3$ und $R^4$ jeweils untereinander verbrückt vorliegen.

Unter dem Begriff "Raum zur Aufnahme von metallischem aktiven Metall" versteht man ein Volumen, welches die beim Laden der Batteriezelle abgeschiedenen Mengen an metallischem aktivem Metall aufnimmt. Beim Laden scheidet sich metallisches aktives Metall unter Volumenzuwachs auf dem Ableitelement der negativen Elektrode ab.

Die erfindungsgemäße wiederaufladbare Batteriezelle sieht vor, dass der Raum zur Aufnahme des abgeschiedenen aktiven Metalls durch eine oder mehrere komprimierbare Strukturen gebildet ist, die durch das beim Laden der Batteriezelle abgeschiedene aktive Metall komprimiert werden. Diese erfindungsgemäße Ausgestaltung hat den erheblichen Vorteil, dass dadurch sichergestellt wird, dass weder das Ableitelement der negativen Elektrode noch die negative Elektrode oder sogar das Gehäuse selbst nicht beschädigt werden aufgrund der Volumenzunahme innerhalb der Batteriezelle. Gleichzeitig wird durch die komprimierbare Struktur auf das sich abscheidende aktive Metall Druck ausgeübt, der dazu beiträgt, dass das aktive Metall sich in kompakter Form abscheidet.

Es ist im Sinne der Erfindung, dass die erfindungsgemäße wiederaufladbare Batteriezelle eine oder mehrere komprimierbare Strukturen aufweist. In der folgenden Betrachtung wird der Einfachheit halber auf eine Batteriezelle mit einer komprimierbaren Struktur eingegangen. Dasselbe gilt sinngemäß auch für Batteriezellen, die mehrere komprimierbare Strukturen enthalten.

Bei der vollständigen Abscheidung des aktiven Metalls entsteht eine Metallschicht der Dicke o. Die komprimierbare Struktur weist im unkomprimierten Zustand eine Schichtdicke p und im maximal komprimierten Zustand eine Schichtdicke q auf. In einer vorteilhaften Weiterbildung der erfindungsgemäßen wiederaufladbaren Batteriezelle gilt somit, dass die Dicke o der abgeschiedenen Metallschicht zusammen mit der Dicke q der komprimierten Struktur im komprimierten Zustand kleiner oder gleich der Dicke p der komprimierbaren Struktur im unkomprimierten Zustand ist, wie es der unten stehenden Gleichung zu entnehmen ist:

$$o + q <= p$$

Allgemein ausgedrückt ist die Summe aus der Dicke der abgeschiedenen Metallschicht und der Dicke der komprimierten Struktur im komprimierten Zustand kleiner oder gleich der Dicke der komprimierbaren Struktur im unkomprimierten Zustand, so dass es sichergestellt wird, dass keine Volumenzunahme bei der erfindungsgemäßen Batteriezelle stattfindet.

Für eine Batteriezelle mit mehreren komprimierbaren Strukturen gilt dementsprechend, dass die komprimierbaren Strukturen 1 bis n im unkomprimierten Zustand die Gesamtschichtdicke $p= p1 + p2 +....+ pn$ und im maximal komprimierten Zustand die Gesamtschichtdicke $q= q1 + q2 +....+qn$ aufweisen. Falls die Metallabscheidung innerhalb einer Batteriezelle an 1 bis n Stellen auftritt, z.B. auf beiden Seiten eines Ableitelements oder auf mehreren Ableitelementen, dann berechnet sich die Gesamtdicke o der insgesamt abgeschiedenen Metallschichten mit $o= o1 + o2+....+on$.

Eine vorteilhafte Weiterbildung der erfindungsgemäßen wiederaufladbaren Batteriezelle sieht vor, dass die komprimierbare Struktur mindestens auf 90%, bevorzugt mindestens auf 70%, weiter bevorzugt mindestens auf 50 %, weiter bevorzugt mindestens auf 30 % und besonders bevorzugt mindestens auf 10 % ihrer ursprünglichen Dicke reduziert werden kann.

Eine weitere vorteilhafte Weiterbildung der erfindungsgemäßen wiederaufladbaren Batteriezelle sieht vor, dass die komprimierbare Struktur so ausgewählt ist, dass sie nach der Auflösung des zuvor abgeschiedenen aktiven Metalls wieder zu ihrem unkomprimierten Zustand zurückgeht. Durch diese vorteilhafte Weiterbildung der erfindungsgemäßen wiederaufladbaren Batteriezelle wird sichergestellt, dass keine Freiräume entstehen, die sich nachteilig auf den Aufbau der Batteriezelle auswirken könnten.

Eine weitere vorteilhafte Weiterbildung der erfindungsgemäßen wiederaufladbaren Batteriezelle sieht vor, dass die komprimierbare Struktur ein Polymer aufweist. Als Strukturen, die sich reversibel komprimieren und wieder ausdehnen, sind im Sinne der vorliegenden Erfindung beispielsweise Strukturen aus:

- gewebten (engl. woven) Polymeren,
- Polymerfolien,
- ungewebten (engl. non woven) Polymeren,
- Polymermembranen oder
- anorganischen Vliesen z.B. Glasfaservliesen

zu verstehen. Die vorliegende Erfindung ist aber auf die genannten Beispiele nicht begrenzt.

Eine weitere vorteilhafte Weiterbildung der erfindungsgemäßen wiederaufladbaren Batteriezelle sieht vor, dass die komprimierbare Struktur durch mindestens ein Ableitelement und/ oder durch mindestens ein Separatorelement gebildet wird.

**Separatorelement**

Eine weitere vorteilhafte Weiterbildung der erfindungsgemäßen wiederaufladbaren Batteriezelle sieht vor, dass die komprimierbare Struktur durch mindestens ein Separatorelement, das sogenannte komprimierbare Separatorelement, gebildet wird.

Das Separatorelement ist ein wichtiges Funktionselement jeder Batteriezelle. Seine Aufgabe ist die elektrische Isolation der positiven und der negativen Elektroden der Batteriezelle. Gleichzeitig gewährt es, dass durch Ionenleitung ein für die Funktion der Zelle erforderlichen Ladungstransport zwischen den Elektroden stattfinden kann. Dazu muss das Separatorelement mit der Elektrolytlösung benetzt sein und von dieser durchdrungen werden.

Eine weitere vorteilhafte Weiterbildung der erfindungsgemäßen wiederaufladbaren Batteriezelle sieht vor, dass das Separatorelement komprimiert werden kann. Das komprimierbare Separatorelement kann aus einem Vlies, einer Membran, einem Gewebe, einem Gewirke, einem organischen Material, einem anorganischen Material oder aus einer Kombination hiervon gebildet werden. Zum Beispiel kann das komprimierbare Separatorelement aus einer organischen Polymermembran und einer Vliesschicht bestehen.

Grundsätzlich sind, abhängig von der Dicke der abgeschiedenen Schicht des aktiven Metalls und der Komprimiereigenschaft des Separatorelements, komprimierbare Separatorelement aller Dicken geeignet.

Vorzugsweise sollte die Dicke des komprimierbaren Separatorelements jedoch höchstens 0,2 mm betragen. Besonders bevorzugt sind aber geringere Dicken wie höchstens 0,15 mm, weiter bevorzugt höchstens 0,1 mm, weiter bevorzugt höchstens 0,09 mm, weiter bevorzugt höchstens 0,08 mm, weiter bevorzugt höchstens 0,07 mm, weiter bevorzugt höchstens 0,06 mm, weiter bevorzugt höchstens 0,05 mm, weiter bevorzugt höchstens 0,04 mm, weiter bevorzugt höchstens 0,03 mm und sehr bevorzugt höchstens 0,02 mm. Das komprimierbare Separatorelement umfasst in einer bevorzugten Ausführungsform eine organische Polymermembran und mindestens eine Vliesschicht, wobei die organische Polymermembran eine erste und eine zweite Oberfläche aufweist und die Vliesschicht eine erste und zweite Vliesschichtoberfläche aufweist. Eine der Oberflächen der organischen Polymermembran kontaktiert eine der Vliesschichtoberflächen. Das Separatorelement kann auch ein Komposit aus einer organischen Polymermembran und einer Vliesschicht sein, wobei die organische Polymermembran und die Vliesschicht derart fest miteinander verbunden sind, dass ihre kontaktierenden Oberflächen unlösbar verbunden sind.

Der Begriff "Vliesschicht" umfasst im Sinne der vorliegenden Erfindung, mindestens eine Schicht aus nichtgewebtem (engl. non woven) organischem oder anorganischem Material. In einer bevorzugten Ausführungsform weist die Vliesschicht ein organisches Material, nämlich ein Polymer, weiter bevorzugt ein Polyolefin und sehr bevorzugt Polypropylen oder Polyethylen auf. In einer weiteren bevorzugten Ausführungsform weist die Vliesschicht aus einem anorganischen Material, bevorzugt ein Glasfaservlies auf.

Eine weitere vorteilhafte Weiterbildung der erfindungsgemäßen wiederaufladbaren Batteriezelle sieht vor, dass die Dicke der Vliesschicht zwischen der ersten und zweiten Vliesschichtoberfläche größer ist als die Dicke der organischen Polymermembran zwischen der ersten und zweiten Oberfläche, bevorzugt mindestens doppelt so groß, besonders bevorzugt mindestens dreimal so groß, besonders bevorzugt mindestens viermal so groß und sehr bevorzugt mindestens fünfmal so groß.

Eine weitere vorteilhafte Weiterbildung der erfindungsgemäßen wiederaufladbaren Batteriezelle sieht vor, dass die Vliesschicht enthaltend das Polymer zusätzlich ein keramisches Material, vorzugsweise Aluminiumoxid, Siliziumoxid oder Titandioxid, aufweist. Zusätzlich zu dem anorganischen Material kann die Vliesschicht enthaltend das Polymer noch ein organisches Bindemittel aufweisen, z.B. PDVF, PTFE oder THV. Sowohl das keramische Material als auch das Bindemittel können als eine Schicht auf der Oberfläche ausgebildet sein und/oder in der porösen Schichtstruktur des Polymervlieses eingebracht sein.

Eine weitere vorteilhafte Weiterbildung der erfindungsgemäßen wiederaufladbaren Batteriezelle sieht vor, dass das komprimierbare Separatorelement aus einer das Polymer enthaltende Vliesschicht gebildet wird, die zusätzlich ein keramisches Material enthält.

Eine weitere vorteilhafte Weiterbildung der erfindungsgemäßen wiederaufladbaren Batteriezelle sieht vor, dass

das komprimierbare Separatorelement unsubstituierte Polyolefine (z.B. Polypropylen oder Polyethylen), partiell bis vollständig halogensubstituierte Polyolefine (z.B. partiell bis ganz fluorsubstituiert, insbesondere PVDF, ETFE, PTFE), Polyester, Polyamide oder Polysulfone aufweist. Komprimierbare Separatorelemente, die eine Kombination von organischen und anorganischen Materialien enthalten, sind zum Beispiel Glasfaser-Textilmaterialien, bei denen die Glasfasern mit einer geeigneten Polymeren Beschichtung versehen sind. Die Beschichtung enthält vorzugsweise ein fluorhaltiges Polymer wie beispielsweise Polytetrafluorethylen (PTFE), Ethylen-Tetrafluorethylen (ETFE), Perfluorethylenpropylen (FEP), THV (Terpolymer aus Tetrafluorethylen, Hexafluorethylen und Vinylidenfluorid), ein Perfluoralkoxy-Polymer (PFA), Aminosilan, Polypropylen oder Polyethylen (PE).

Eine weitere vorteilhafte Weiterbildung der erfindungsgemäßen wiederaufladbaren Batteriezelle sieht vor, dass ein oder mehrere Separatorelement ein nicht komprimierbares Material aufweisen.

Wenn die Batteriezelle über einen anderen Raum zur Aufnahme von metallischem aktivem Metallverfügt, welcher die beim Laden der Batteriezelle abgeschiedenen Mengen an metallischem aktivem Metall aufnimmt, oder über andere komprimierbare Strukturen verfügt, dann sieht eine weitere vorteilhafte Weiterbildung der erfindungsgemäßen wiederaufladbaren Batteriezelle vor, dass alle Separatorelemente aus einem nicht komprimierbaren Material ausgebildet sind.

**Ableitelement**

Eine weitere vorteilhafte Weiterbildung der erfindungsgemäßen wiederaufladbaren Batteriezelle sieht vor, dass die komprimierbare Struktur durch mindestens ein Ableitelement gebildet wird.

Ein Ableitelement dient dazu, den erforderlichen elektronisch leitenden Anschluss an den äußeren Stromkreis des aktiven Materials der negativen oder positiven Elektrode zu ermöglichen. Hierfür steht das Ableitelement in Kontakt mit dem an der Elektrodenreaktion der negativen oder positiven Elektrode beteiligten aktiven Material. Das Ableitelement muss zumindest zum Teil aus einem elektronisch leitenden Material bestehen. Üblicherweise besteht das Ableitelement aus einem Metall, wie Kupfer, Aluminium oder Nickel. Eine weitere vorteilhafte Weiterbildung der erfindungsgemäßen wiederaufladbaren Batteriezelle sieht vor, dass die komprimierbare Struktur durch ein Ableitelement gebildet wird, welches als ein Komposit umfassend mehrere Bestandteile ausgebildet ist. Zum Beispiel kann ein Ableitelement aus einer komprimierbaren Struktur bestehen, welche auf beiden Seiten mit einem Metall wie Kupfer, Aluminium oder Nickel, beschichtet ist. Zusätzlich können auch die Kanten oder Ränder der komprimierbaren Struktur mit Metall beschichtet sein. Dadurch entsteht ein komprimierbares Ableitelement. Dieses komprimierbare Ableitelement kann zum Beispiel ein einseitig oder beidseitig mit Metall beschichtetes, komprimierbares Polymer sein, welches bei der Abscheidung von metallischem aktivem Metall komprimiert wird und dadurch Platz für das abgeschiedene Metall bietet.

Eine weitere vorteilhafte Weiterbildung der erfindungsgemäßen wiederaufladbaren Batteriezelle sieht vor, dass die komprimierbare Struktur durch ein Ableitelement gebildet wird, welches aus einem komprimierbaren Metall besteht. Beispielsweise kann ein Metallvlies verwendet werden. Optional kann das Metallvlies mit einem weiteren Metall beschichtet sein.

In einer bevorzugten Ausführungsform ist das Polymer stabil gegenüber dem $SO_2$-basier-ten Elektrolyten und gegenüber einer Metallbeschichtung, auch bei höheren Temperaturen. Als geeignete Polymere gelten, wobei nicht auf diese beschränkt sind, z.B. Polypropylen (PP), Polyethylen (PE), Polyurethan (PU), Polystyrol (PS), Polyamid (PA), Polyethylenterephthalat (PET) oder Polyvinylidenfluorid (PVDF). Die Metallbeschichtung, durch die eine elektronische Leitfähigkeit hergestellt wird, besteht z.B. aus Kupfer für das Ableitelement der negativen Elektrode und z.B. aus Aluminium für das Ableitelement der positiven Elektrode.

Das komprimierbare Ableitelement kann in einer weiteren vorteilhaften Weiterbildung der erfindungsgemäßen wiederaufladbaren Batteriezelle als Ableitelement für die negative Elektrode, die positive Elektrode oder für beide Elektroden verwendet werden. Besteht die Batteriezelle aus mehreren positiven und negativen Elektroden, so können einzelne oder alle Elektroden ein komprimierbares Ableitelement enthalten.

Die Dicke des komprimierbaren Ableitelements sollte vorzugsweise höchstens 0,1 mm betragen. Besonders bevorzugt sind aber geringere Dicken wie höchstens 0,08 mm, weiter bevorzugt höchstens 0,06 mm, weiter bevorzugt höchstens 0,04 mm, weiter bevorzugt höchstens 0,02 mm und sehr bevorzugt höchstens 0,01 mm.

Eine weitere vorteilhafte Weiterbildung der erfindungsgemäßen wiederaufladbaren Batteriezelle sieht vor, dass die Dicke des komprimierbaren Polymers im unkomprimierten Zustand größer ist als die Dicke der Metallbeschichtung, bevorzugt mindestens doppelt so groß, besonders bevorzugt mindestens dreimal so groß, besonders bevorzugt mindestens viermal so groß und sehr bevorzugt mindestens fünfmal so groß.

Beispielweise kann das komprimierbare Ableitelement beidseitig jeweils eine Metallbeschichtung von 1 $\mu$m aufweisen und dazwischen eine komprimierbare Polymerschicht von 8 $\mu$m. Dieses Ableitelement hat dann eine Gesamtdicke von 10$\mu$m.

Eine weitere vorteilhafte Weiterbildung der erfindungsgemäßen Batteriezelle sieht vor, dass das Ableitelement der negativen Elektrode und/ oder der positiven Elektrode durch ein nicht komprimierbares, planares Ableitelement in

Form eines dünnen Metallblechs oder einer dünnen Metallfolie gebildet wird. Die dünne Metallfolie weist vorzugsweise eine durchbrochene bzw. netzartige Struktur auf. Das planare Ableitelement kann auch aus einer mit Metall beschichtetet Kunststofffolie bestehen. Diese Metallbeschichtungen weisen eine Dicke im Bereich von 0,1 µm bis 20µm auf. Das aktive Material der negativen oder positiven Elektrode ist vorzugsweise auf die Oberfläche des dünnen Metallblechs, der dünnen Metallfolie oder der mit Metall beschichteten Kunststofffolie aufgebracht. Das aktive Material kann auf der Vorder- und/oder der Rückseite des planaren Ableitelements aufgebracht sein. Derartige planare Ableitelemente weisen eine Dicke im Bereich von 5 µm bis 50 µm auf. Eine Dicke des planaren Ableitelements im Bereich von 10 µm bis 30 µm ist bevorzugt. Bei der Verwendung von planaren Ableitelementen kann die Elektrode eine Gesamtdicke von mindestens 20 µm, bevorzugt mindestens 40 µm und besonders bevorzugt mindestens 60 µm aufweisen. Die maximale Dicke beträgt höchstens 200 µm, bevorzugt höchstens 150 µm und besonders bevorzugt höchstens 100 µm.

Die flächenspezifische Kapazität der negativen Elektrode bezogen auf die Beschichtung einer Seite weist bei der Verwendung eines planaren Ableitelements im geladenen Zustand der Batteriezelle vorzugsweise mindestens 0,5 $mAh/cm^2$ auf, wobei folgende Werte in dieser Reihenfolge weiter bevorzugt sind: 1 $mAh/cm^2$, 3 $mAh/cm^2$, 5 $mAh/cm^2$, 10 $mAh/cm^2$, 15 $mAh/cm^2$, 20 $mAh/cm^2$, 25 $mAh/cm^2$.

Eine weitere vorteilhafte Weiterbildung der erfindungsgemäßen Batteriezelle sieht vor, dass das Ableitelement der negativen Elektrode und/ oder der positiven Elektrode durch ein dreidimensionales Ableitelement in Form einer porösen Metallstruktur, insbesondere in Form eines Metallschaums gebildet wird. Der Begriff "dreidimensionale poröse Metallstruktur" bezeichnet dabei jede aus Metall bestehende Struktur, die sich nicht nur wie das dünne Metallblech bzw. die Metallfolie über Länge und Breite der flächigen Elektrode erstreckt, sondern auch über deren Dickendimension. Die dreidimensionale poröse Metallstruktur ist derartig porös, dass zum Beispiel das aktive Material der negativen Elektrode, beispielsweise metallisches Lithium oder Natrium, in den Poren der Metallstruktur abgeschieden werden kann oder, dass das aktive Material der positiven Elektrode in die Poren der Metallstruktur eingearbeitet werden kann. Bei der Menge an abgeschiedenem bzw. eingearbeitetem bzw. aufgebrachten aktivem Material handelt es sich um die Beladung der Elektrode.

Wenn das Ableitelement dreidimensional in Form einer porösen Metallstruktur, insbesondere in Form eines Metallschaums ausgebildet ist, dann weist die Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Die Dicke der Elektroden ist in diesem Fall deutlich größer im Vergleich zu negativen Elektroden, welche bei organischen Metall-Zellen Anwendung finden.

Eine weitere vorteilhafte Ausgestaltung sieht vor, dass die flächenspezifische Kapazität der negativen Elektrode im geladenen Zustand der Batteriezelle bei der Verwendung eines dreidimensionalen Ableitelements insbesondere in Form eines Metallschaums, vorzugsweise mindestens 2,5 $mAh/cm^2$ beträgt, wobei folgende Werte in dieser Reihenfolge weiter bevorzugt sind: 5 $mAh/cm^2$, 15 $mAh/cm^2$, 25 $mAh/cm^2$, 35 $mAh/cm^2$, 45 $mAh/cm^2$ Eine weitere vorteilhafte Ausgestaltung sieht vor, dass die flächenspezifische Kapazität der positiven Elektrode bei der Verwendung eines dreidimensionalen Ableitelements, insbesondere in Form eines Metallschaums vorzugsweise mindestens 2,5 $mAh/cm^2$ beträgt, wobei folgende Werte in dieser Reihenfolge weiter bevorzugt sind: 5 $mAh/cm^2$, 15 $mAh/cm^2$, 25 $mAh/cm^2$, 35 $mAh/cm^2$, 45 $mAh/cm^2$, 55 $mAh/cm^2$, 65 mAh/cm2, 75 $mAh/cm^2$. Wenn das Ableitelement dreidimensional in Form einer porösen Metallstruktur, insbesondere in Form eines Metallschaums ausgebildet ist, beträgt die Menge des aktiven Materials der positiven Elektrode, d.h. die Beladung der Elektrode, bezogen auf ihre Fläche, mindestens 10 $mg/cm^2$, bevorzugt mindestens 20 $mg/cm^2$, weiter bevorzugt mindestens 40 $mg/cm^2$, weiter bevorzugt mindestens 60 $mg/cm^2$, weiter bevorzugt mindestens 80 $mg/cm^2$ und besonders bevorzugt mindestens 100 $mg/cm^2$. Diese Beladung der positiven Elektrode wirkt sich positiv auf den Ladevorgang sowie den Entladevorgang der wiederaufladbaren Batteriezelle aus.

## Aktives Metall

Nachfolgend sind vorteilhafte Weiterbildungen der erfindungsgemäßen wiederaufladbaren Batteriezelle im Hinblick auf das aktive Metall beschrieben:
In einer vorteilhaften Weiterbildung der wiederaufladbare Batteriezelle ist das aktive Metall

- ein Alkalimetall, insbesondere Lithium oder Natrium;
- ein Erdalkalimetall, insbesondere Calcium;
- ein Metall der Gruppe 12 des Periodensystems, insbesondere Zink; oder
- Aluminium.

Eine vorteilhafte Weiterbildung der erfindungsgemäßen wiederaufladbaren Batteriezelle sieht vor, dass das aktive Metall Lithium oder Natrium ist.

Eine weitere vorteilhafte Weiterbildung der erfindungsgemäßen wiederaufladbaren Batteriezelle sieht vor, dass

das aktive Metall Lithium ist.

**Negative Elektrode**

Das aktive Material der negativen Elektrode ist das aktive Metall in metallischer Form. Dieses wird beim Laden der wiederaufladbaren Batteriezelle auf dem Ableitelement der negativen Elektrode abgeschieden. Das bedeutet, dass die negative Elektrode neben dem metallischen aktiven Metall als aktives Material auch ein Ableitelement umfasst. In einer vorteilhaften Weiterbildung der wiederaufladbare Batteriezelle ist das aktive Material der negativen Elektrode ein Alkalimetall, insbesondere Lithium oder Natrium.

Eine vorteilhafte Weiterbildung der erfindungsgemäßen wiederaufladbaren Batteriezelle sieht vor, dass zumindest beim ersten Laden ein erster Teil des metallischen aktiven Metalls mit einer Stromstärke abgeschieden wird, die höher ist als die Stromstärke, mit der der restliche Teil des metallischen aktiven Metalls abgeschieden wird. Diese Maßnahme hat den erheblichen Vorteil, dass sich das metallische aktive Metall beim Laden uniform und nicht in Form von Dendriten abscheidet. Somit wird das unkontrollierbare Dendriten-Wachstum, das zu einer Ansammlung eines höchst reaktiven Metalls mit einer großen Oberfläche führt bei der erfindungsgemäßen Batteriezelle deutlich minimiert.

Eine weitere vorteilhafte Weiterbildung der erfindungsgemäßen wiederaufladbaren Batteriezelle sieht vor, dass der erste Teil des metallischen aktiven Metalls, der beim ersten Laden mit einer höheren Stromstärke abgeschieden wird mindestens 3 Gew%, bevorzugt mindestens 5 Gew%, weiter bevorzugt mindestens 10 Gew%, weiter bevorzugt mindestens 30 Gew%, weiter bevorzugt mindestens 50 Gew%, weiter bevorzugt mindestens 70 Gew%, weiter bevorzugt mindestens 90 Gew% und besonders bevorzugt mindestens 100% Gew% bezogen auf die Gesamtmenge des abgeschiedenen aktiven Metalls beträgt.

Eine vorteilhafte Weiterbildung der erfindungsgemäßen wiederaufladbaren Batteriezelle sieht vor, dass das aktive Material der Batteriezelle metallisches Lithium ist und dass zumindest beim ersten Laden ein Teil des metallischen Lithiums mit einer Stromstärke von mindestens 3 $mA/cm^2$, bevorzugt mindestens 3,5 $mA/cm^2$, bevorzugt von mindestens 4,0 $mA/cm^2$, weiter bevorzugt von mindestens 4,5 $mA/cm^2$, weiter bevorzugt von mindestens 5,0 $mA/cm^2$, weiter bevorzugt von mindestens 5,5 $mA/cm^2$ und besonders bevorzugt von mindestens 6,0 $mA/cm^2$ bezogen auf die einseitige Fläche der negativen Elektrode, abgeschieden wird. Wie schon oben beschrieben, hat diese Maßnahme den erheblichen Vorteil, dass sich das metallische Lithium beim Laden uniform und nicht in Form von Dendriten abscheidet. Somit wird das unkontrollierbare Lithium-Dendriten-Wachstum, das zu einer Ansammlung eines höchst reaktiven Metalls mit einer großen Oberfläche führt bei der erfindungsgemäßen Batteriezelle deutlich minimiert.

Eine weitere vorteilhafte Weiterbildung der erfindungsgemäßen wiederaufladbaren Batteriezelle sieht vor, dass der Teil des metallischen Lithiums, der beim ersten Laden mit einer Stromstärke von mindestens 3 $mA/cm^2$ bezogen auf die einseitige Fläche der negativen Elektrode abgeschieden wird, mindestens 3 Gew%, bevorzugt mindestens 5 Gew%, weiter bevorzugt mindestens 10 Gew%, weiter bevorzugt mindestens 30 Gew%, weiter bevorzugt mindestens 50 Gew%, weiter bevorzugt mindestens 70 Gew%, weiter bevorzugt mindestens 90 Gew% und besonders bevorzugt mindestens 100% Gew% bezogen auf die Gesamtmenge des abgeschiedenen Lithiums beträgt.

Nachfolgend sind vorteilhafte Weiterbildungen der erfindungsgemäßen wiederaufladbaren Batteriezelle im Hinblick auf die negative Elektrode beschrieben:

Eine vorteilhafte Weiterbildung der erfindungsgemäßen wiederaufladbaren Batteriezelle sieht vor, dass das elektronisch leitende Ableitelement der negativen Elektrode im entladenen Zustand der wiederaufladbaren Batteriezelle frei von metallischem aktiven Metall ist. Beim Laden der Batteriezelle scheidet sich metallisches aktives Metall auf dem elektronisch leitenden Ableitelement der negativen Elektrode ab. Beim Entladen wird das metallische aktive Metall im Wesentlichen vollständig aufgelöst und gelangt in Form von Ionen in die Wirtsmatrix des aktiven Materials der positiven Elektrode.

Eine weitere vorteilhafte Weiterbildung der erfindungsgemäßen Batteriezelle sieht vor, dass das elektronisch leitende Ableitelement der negativen Elektrode schon vor dem ersten Laden der wiederaufladbaren Batteriezelle metallisches aktives Metall umfasst. Beim Laden der Batteriezelle scheidet sich weiteres metallisches aktives Metall auf das elektronisch leitende Ableitelement ab. Beim Entladen wird das metallische aktive Metall vollständig oder nur zum Teil aufgelöst und gelangt in Form von Ionen in die Wirtsmatrix des aktiven Materials der positiven Elektrode. Das metallische aktive Metall, welches sich schon auf dem Ableitelement befindet, kann zum einen vor Zusammenbau der Batteriezelle auf das Ableitelement aufgebracht und zusammen mit diesem in die Batteriezelle eingebaut werden. Zum anderen kann das metallische aktive Metall vor dem Betrieb der Batteriezelle, d.h. vor dem ersten Laden und Entladen durch einen vorangehenden Initialisierungsladevorgang auf dem Ableitelement der negativen Elektrode abgeschieden werden.

Eine weitere vorteilhafte Weiterbildung der erfindungsgemäßen Batteriezelle sieht vor, dass das das Ableitelement der negativen Elektrode zumindest teilweise aus einem Material ausgebildet ist, welches das aktive Metall speichern kann. Bei einer solchen Weiterbildung wird beim Laden der Batteriezelle zunächst ein Teil des aus der Elektrodenreaktion resultierenden aktiven Metalls in dem elektronisch leitenden Ableitelement aus dem Material, welches das aktive Metall speichern kann, gespeichert. Beim weiteren Laden der Batteriezelle scheidet sich dann metallisches aktives

Metall auf das elektronisch leitende Ableitelement ab. Beim Entladen wird das metallische aktive Metall vollständig oder nur zum Teil aufgelöst und gelangt in Form von Ionen in die Wirtsmatrix des aktiven Materials der positiven Elektrode.

Eine weitere vorteilhafte Weiterbildung der erfindungsgemäßen Batteriezelle sieht vor, dass das das Ableitelement der negativen Elektrode zumindest teilweise aus einem lithiumspeichernden Material ausgebildet ist. Das lithiumspeichernde Material kann zum Beispiel das Insertionsmaterial Kohlenstoff, insbesondere in der Modifikation Graphit, sein. Es kann auch ein mit Lithium Legierungsbildendes Material, wie beispielsweise Lithium-speichernde Metalle und Metalllegierungen (z.B. Si, Ge, Sn, $SnCo_xC_y$, $SnSi_x$ und dergleichen, dabei bevorzugt Silizium) oder Oxide der Lithium-speichernden Metalle und Metalllegierungen (z.B. $SnO_x$, $SiO_x$, oxidische Gläser von Sn, Si und dergleichen) oder ein Lithium-Interkalations-Material sein, welches keinen Kohlenstoff enthält, wie beispielsweise Lithium-Titanate, insbesondere $Li_4Ti_5O_{12}$. Auch Konversions-Materialien wie beispielsweise Übergangsmetalloxide können als lithiumspeichernde Materialien verwendet werden.

Eine weitere vorteilhafte Weiterbildung der erfindungsgemäßen Batteriezelle sieht vor, dass das das Ableitelement der negativen Elektrode zumindest teilweise aus einem natriumspeichernden Material ausgebildet ist. Das natriumspeichernde Material kann zum Beispiel das Insertionsmaterial Kohlenstoff, insbesondere Hartkohlenstoff (engl. hard carbon), Weichkohlenstoff (engl. soft carbon), Graphen oder heteroatom gedopten Kohlenstoffen, sein. Es kann auch ein mit Natrium Legierungsbildendes Material, wie beispielsweise Natrium-speichernde Metalle und Metalllegierungen (z.B. Sn, Sb,), Sulfide oder Oxide der Natrium-speichernden Metalle und Metalllegierungen (z.B. $SnS_x$, $SbS_x$, oxidische Gläser von Sn, Sb und dergleichen) sein. Es kann auch ein Lithium-Interkalations-Material sein, welches keinen Kohlenstoff enthält, wie beispielsweise wie beispielsweise Natrium-Titanate, insbesondere $Na_2Ti_3O_7$ oder $NaTi_2(PO_4)_3$. Auch Konversions-Materialien wie beispielsweise Übergangsmetalloxide können als natriumspeichernde Materialien verwendet werden.

**Elektrolyt**

Nachfolgend sind vorteilhafte Weiterbildungen der wiederaufladbaren Batteriezelle im Hinblick auf den auf $SO_2$-basierenden Elektrolyten beschrieben.

Der in der erfindungsgemäßen wiederaufladbaren Batteriezelle verwendete auf $SO_2$-ba-sierende Elektrolyt enthält, wie oben schon beschrieben, $SO_2$ nicht nur als Zusatz in geringer Konzentration, sondern in Konzentrationen, bei denen die Beweglichkeit der Ionen des ersten Leitsalzes, das in dem Elektrolyten enthalten ist und den Ladungstransport bewirkt, zumindest teilweise, größtenteils oder sogar vollständig durch das $SO_2$ gewährleistet ist.

Ein wiederaufladbare Batteriezelle mit einem derartigen Elektrolyten hat gegenüber wiederaufladbaren Batteriezellen mit aus dem Stand der Technik bekannten Elektrolyten den Vorteil, dass das darin enthaltene erste Leitsalz eine höhere Oxidationsstabilität aufweist und infolgedessen im Wesentlichen keine Zersetzung bei höheren Zellspannungen zeigt. Dieser Elektrolyt ist oxidationsstabil bevorzugt mindestens bis zu einem oberen Potential von 4,0 Volt, weiter bevorzugt mindestens bis zu einem oberen Potential von 4,2 Volt, weiter bevorzugt mindestens bis zu einem oberen Potential von 4,4 Volt, weiter bevorzugt mindestens bis zu einem oberen Potential von 4,6 Volt, weiter bevorzugt mindestens bis zu einem oberen Potential von 4,8 Volt und besonders bevorzugt mindestens bis zu einem oberen Potential von 5,0 Volt. Somit kommt es bei der Verwendung eines solchen Elektrolyten in einer wiederaufladbaren Batteriezelle zu einer nur geringen oder sogar gar keinen Elektrolytzersetzung innerhalb der Arbeitspotentiale, also im Bereich zwischen der Ladeschlussspannung und der Entladeschlussspannung, beider Elektroden der wiederaufladbaren Batteriezelle. Dadurch können erfindungsgemäße wiederaufladbare Batteriezellen eine Ladeschlussspannung von mindestens 4,0 Volt, weiter bevorzugt von mindestens 4,4 Volt, weiter bevorzugt von mindestens 4,8 Volt, weiter bevorzugt von mindestens 5,2 Volt, weiter bevorzugt von mindestens 5,6 Volt und besonders bevorzugt von mindestens 6,0 Volt aufweisen.

Die Lebensdauer der wiederaufladbaren Batteriezelle, die diesen Elektrolyten enthält, ist gegenüber wiederaufladbaren Batteriezellen, die aus dem Stand der Technik bekannten Elektrolyten enthalten, deutlich verlängert.

Weiterhin ist eine wiederaufladbaren Batteriezelle mit einem solchem Elektrolyten auch tieftemperaturfest. Bei einer Temperatur von z.B. -40°C können noch 61% der geladenen Kapazität entladen werden. Die Leitfähigkeit des Elektrolyten bei tiefen Temperaturen ist ausreichend zum Betrieb einer Batteriezelle.

Weiterhin weist eine wiederaufladbaren Batteriezelle mit einem solchem Elektrolyten eine gesteigerte Stabilität gegenüber Restmengen an Wasser auf. Sofern sich in dem Elektrolyten noch geringe Restmengen an Wasser (im ppm-Bereich) befinden, so bildet der Elektrolyt bzw. das erste Leitsalz mit dem Wasser im Vergleich zu den aus dem Stand der Technik bekannten, auf $SO_2$-basierenden Elektrolyten Hydrolyseprodukte, welche deutlich weniger aggressiv gegenüber den Zellkomponenten sind. Aufgrund dessen spielt eine Wasserfreiheit des Elektrolyts im Vergleich zu den aus dem Stand der Technik bekannten, auf $SO_2$-basierenden Elektrolyten eine weniger bedeutende Rolle. Diese Vorteile des erfindungsgemäßen Elektrolyten überwiegen den Nachteil, der dadurch entsteht, dass das erste Leitsalz nach Formel (I) eine im Vergleich zu den aus dem Stand der Technik bekannten Leitsalze deutlich höhere Anionengröße aufweist. Diese höhere Anionengröße führt zu einer im Vergleich zur Leitfähigkeit von beispielsweise $LiAlCl_4$ oder $NaAlCl_4$

geringeren Leitfähigkeit des ersten Leitsalzes gemäß Formel (I).

In einer weiteren vorteilhaften Ausgestaltung der wiederaufladbaren Batteriezellen sind die Substituenten $R^1$, $R^2$, $R^3$ und $R^4$ des ersten Leitsalzes unabhängig voneinander ausgewählt aus der Gruppe bestehend aus

- $C_1$-$C_6$, Alkyl, bevorzugt $C_2$-$C_4$ Alkyl, besonders bevorzugt 2-Propyl, Methyl und Ethyl;
- $C_2$-$C_6$ Alkenyl, bevorzugt $C_2$-$C_4$ Alkenyl, besonders bevorzugt Ethenyl und Propenyl;
- $C_2$-$C_6$-Alkinyl, bevorzugt $C_2$-$C_4$-Alkinyl;
- $C_3$-$C_6$ Cycloalkyl;
- Phenyl; und
- $C_5$-$C_7$ Heteroaryl;
- wobei die aliphatischen, cyclischen, aromatischen und heteroaromatischen Gruppen unsubstituiert oder substituiert sein können.

In einer weiteren vorteilhaften Weiterbildung der erfindungsgemäßen wiederaufladbaren Batteriezelle sind zumindest zwei der Substituenten $R^1$, $R^2$, $R^3$ und $R^4$ zur Ausbildung eines zweizähnigen Chelatliganden untereinander verbrückt. Ein solcher zweizähniger Chelatligand kann beispielsweise die folgende Struktur aufweisen:

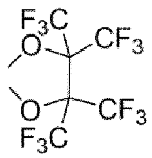

Vorzugsweise können auch drei oder sogar vier der Substituenten $R^1$, $R^2$, $R^3$ und $R^4$ zur Ausbildung eines dreizähnigen bzw. vierzähnigen Chelatliganden untereinander verbrückt sein. Der Chelatligand koordiniert an das Zentralatom Z unter Bildung eines Chelatkomplexes. Der Begriff "Chelatkomplex" - oder auch verkürzt als Chelat bezeichnet - steht für Komplexverbindungen, bei denen ein mehrzähniger Ligand (besitzt mehr als ein freies Elektronenpaar) mindestens zwei Koordinationsstellen (Bindungsstellen) des Zentralatoms einnimmt. Beim Zentralatom handelt es sich um das positiv geladene Metallionen $Al^{3+}$ oder $B^{3+}$. Liganden und Zentralatom sind über koordinative Bindungen verknüpft, das bedeutet, dass das bindende Elektronenpaar allein vom Liganden bereitgestellt wird.

Zur Verbesserung der Löslichkeit des ersten Leitsalzes in dem auf $SO_2$-basierenden Elektrolyten sind die Substituenten $R^1$, $R^2$, $R^3$ und $R^4$ in einer weiteren vorteilhaften Ausgestaltung der wiederaufladbaren Batteriezelle durch mindestens ein Fluoratom und/oder durch mindestens eine chemische Gruppe substituiert, wobei die chemische Gruppe ausgewählt ist aus der Gruppe bestehend aus $C_1$-$C_4$-Alkyl, $C_2$-$C_4$-Alkenyl, $C_2$-$C_4$-Alkinyl, Phenyl und Benzyl. Die chemischen Gruppen C -$C_4$-Alkyl, C -$C_4$-Alkenyl, $C_2$-$C_4$-Alkinyl, Phenyl und Benzyl weisen dieselben Eigenschaften bzw. chemischen Strukturen auf, wie die zuvor beschriebenen Kohlenwasserstoffgruppen. Substituiert bedeutet in diesem Zusammenhang, dass einzelne Atome oder Atomgruppen der Substituenten $R^1$, $R^2$, $R^3$ und $R^4$ durch das Fluoratom und/oder durch die chemische Gruppe ersetzt sind.

Eine besonders hohe Löslichkeit des ersten Leitsalzes in dem auf $SO_2$-basierenden Elektrolyten kann dadurch erreicht werden, dass zumindest einer der Substituenten $R^1$, $R^2$, $R^3$ und $R^4$ eine $CF_3$-Gruppe oder eine OSO $CF_3$-Gruppe ist.

In einer weiteren vorteilhaften Weiterbildung der wiederaufladbaren Batteriezelle ist das erste Leitsalz ausgewählt aus der Gruppe bestehend aus:

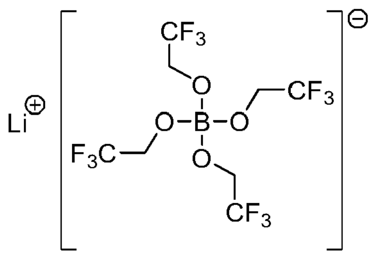

$Li[B(OCH_2CF_3)_4]$

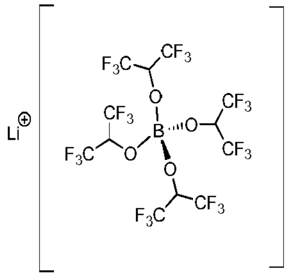

$Li[B(OCH(CF\ )_2)_4]$

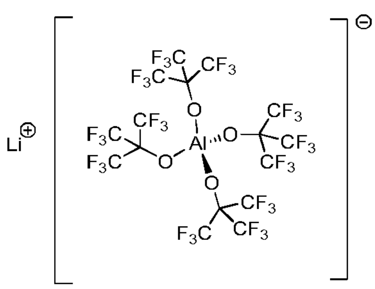

$Li[Al(OC(CF_3)_3)_4]$

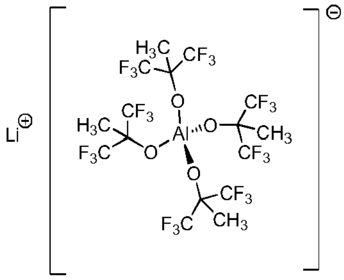
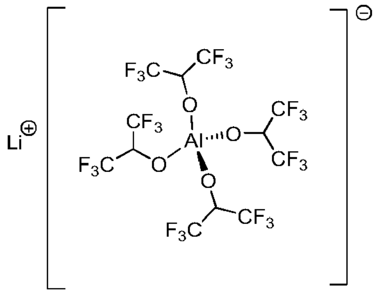
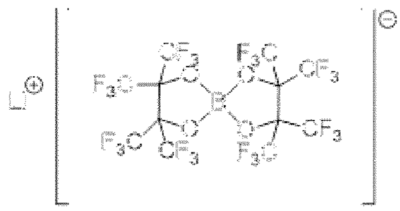

$Li[Al(OC(CH_3)(CF_3)_2)_4]$ $Li[Al(OCH(CF_3)_2)_4]$ $LiB(O_2C_2(CF\ )_4)_2$

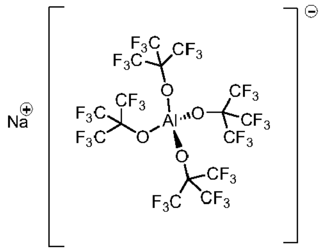
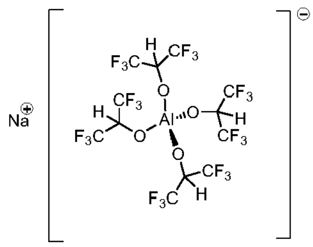
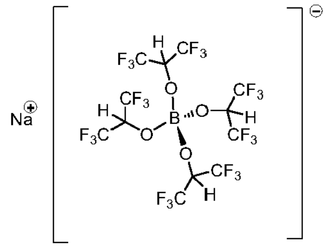

$Na[Al(OC(CF_3)_3)_4]$ $Na[Al(OCH(CF_3)_2)_4]$ $Na[B(OCH(CF_3)_2)_4]$

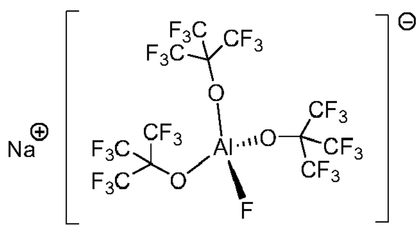
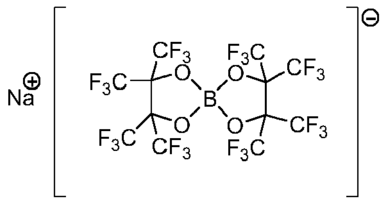
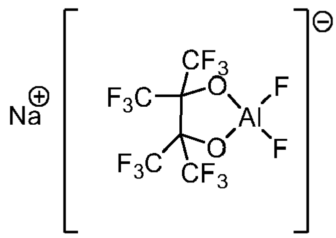

$NaAlF(OC(CF_3)_3)_3$ $NaB[O_2C_2(CF_3)_4]_2$ $NaAlF_2(O_2C_2(CF_3)_4)$

Um die Leitfähigkeit und/oder weitere Eigenschaften des Elektrolyten an einen gewünschten Wert anzupassen, weist der Elektrolyt in einer weiteren vorteilhaften Ausgestaltung der erfindungsgemäßen wiederaufladbaren Batteriezelle zumindest ein zweites, von dem ersten Leitsalz nach Formel (I) abweichendes Leitsalz auf. Das bedeutet, dass der Elektrolyt neben dem ersten Leitsalz ein oder auch weitere zweite Leitsalze enthalten kann, die sich in ihrer chemischen Zusammensetzung sowie ihrer chemischen Struktur von dem ersten Leitsalz unterscheiden.

In einer weiteren vorteilhaften Ausgestaltung der erfindungsgemäßen wiederaufladbaren Batteriezelle ist das zweite Leitsalz eine Alkalimetallverbindung, insbesondere eine Lithiumverbindung oder eine Natriumverbindung. Die Alkalimetallverbindung oder die Lithiumverbindung oder die Natriumverbindung sind ausgewählt aus der Gruppe bestehend aus einem Aluminat, einem Halogenid, einem Oxalat, einem Borat, einem Phosphat, einem Arsenat und einem Gallat. Vorzugsweise ist das zweite Leitsalz ein Lithium- oder Natriumtetrahalogenoaluminat, insbesondere $LiAlCl_4$ oder $NaAlCl_4$

Des Weiteren enthält der Elektrolyt in einer weiteren vorteilhaften Ausgestaltung der erfindungsgemäßen wiederaufladbaren Batteriezelle zumindest ein Additiv. Dieses Additiv ist vorzugsweise ausgewählt aus der Gruppe bestehend aus Vinylencarbonat und seinen Derivaten, Vinylethylencarbonat und seinen Derivaten, Methylethylencarbonat und seinen Derivaten, Lithium(bisoxalato)borat, Lithiumdifluor(oxalato)borat, Lithiumtetrafluor(oxala-to)phosphat, Lithiumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester anorganischer Säuren, acyclische und cyclische Alkane, welche acyclischen und cyclischen Alkane einen Siedepunkt bei 1 bar von mindestens 36 °C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte

cyclische und acyclische halogenierte Ester, halogenierte cyclische und acyclische Amide, halogenierte cyclische und acyclische Anhydride und halogenierte organische Heterocyclen.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs.

Wie bereits zuvor erwähnt, kann der Elektrolyt nicht nur ein erstes Leitsalz nach Formel (I) und ein zweites Leitsalz enthalten, sondern jeweils auch mehrere erste Leitsalze nach Formel (I) und mehrere zweite Leitsalze. Die zuvor genannten prozentualen Anteile schließen im letztgenannten Fall auch mehrere erste Leitsalze und mehrere zweite Leitsalze ein. Die Stoffmengenkonzentration des ersten Leitsalzes liegt im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten.

Eine weitere vorteilhafte Weiterbildung der erfindungsgemäßen wiederaufladbaren Batteriezelle sieht vor, dass der Elektrolyt mindestens 0,1 Mol $SO_2$, bevorzugt mindestens 1 Mol $SO_2$, weiter bevorzugt mindestens 5 Mol $SO_2$, weiter bevorzugt mindestens 10 Mol $SO_2$ und besonders bevorzugt mindestens 20 Mol $SO_2$ je Mol Leitsalz enthält. Der Elektrolyt kann auch sehr hohe molare Anteile an $SO_2$ enthalten, wobei der bevorzugte obere Grenzwert mit 2600 Mol $SO_2$ je Mol Leitsalz angegeben werden kann und Obergrenzen von 1500, 1000, 500 und 100 Mol $SO_2$ je Mol Leitsalz in dieser Reihenfolge weiter bevorzugt sind. Der Begriff "je Mol Leitsalz" bezieht sich dabei auf alle Leitsalze, die im Elektrolyten enthalten sind. Auf $SO_2$-basierende Elektrolyte mit einem derartigen Konzentrationsverhältnis zwischen $SO_2$ und dem Leitsalz haben den Vorteil, dass sie im Vergleich zu den aus dem Stand der Technik bekannten Elektrolyten, welche beispielsweise auf einem organischen Lösungsmittelgemisch basieren, eine größere Menge an Leitsalz lösen können. Im Rahmen der Erfindung wurde festgestellt, dass überraschenderweise ein Elektrolyt mit einer relativ geringen Konzentration an Leitsalz trotz des damit verbundenen höheren Dampfdrucks vorteilhaft ist, insbesondere hinsichtlich dessen Stabilität über viele Lade- und Entladezyklen der wiederaufladbaren Batteriezelle. Die Konzentration an $SO_2$ im Elektrolyten wirkt sich auf dessen Leitfähigkeit aus. Somit kann durch die Wahl der $SO_2$-Konzentration die Leitfähigkeit des Elektrolyten an die geplante Verwendung einer mit diesem Elektrolyten betriebenen wiederaufladbaren Batteriezelle angepasst werden. Der Gesamtgehalt von $SO_2$ und dem ersten Leitsalz kann größer als 50 Gewichtsprozent (Gew%) des Gewichts des Elektrolyten sein, bevorzugt größer als 60 Gew%, weiter bevorzugt größer als 70 Gew%, weiter bevorzugt größer als 80 Gew%, weiter bevorzugt größer als 85 Gew%, weiter bevorzugt größer als 90 Gew%, weiter bevorzugt größer als 95 Gew% oder weiter bevorzugt größer als 99 Gew%.

Der Elektrolyt kann mindestens 5 Gew% $SO_2$ bezogen auf die Gesamtmenge des in der wiederaufladbaren Batteriezelle enthaltenen Elektrolyten enthalten, wobei Werte von 20 Gew% $SO_2$, 40 Gew% $SO_2$ und 60 Gew% $SO_2$ weiter bevorzugt sind. Der Elektrolyt kann auch bis zu 95 Gew% $SO_2$ enthalten, wobei Maximalwerte von 80 Gew% $SO_2$ und 90 Gew% $SO_2$ in dieser Reihenfolge bevorzugt sind.

Es liegt im Rahmen der Erfindung, dass der Elektrolyt vorzugsweise einen nur geringen oder sogar gar keinen prozentualen Anteil an zumindest einem organischen Lösungsmittel aufweist. Vorzugsweise kann der Anteil an organischen Lösungsmitteln im Elektrolyten, welche beispielsweise in Form eines oder einer Mischung mehrerer Lösungsmittel vorhanden ist, höchstens 50 Gew% des Gewichts des Elektrolyten betragen. Besonders bevorzugt sind geringere Anteile von höchstens 40 Gew%, von höchstens 30 Gew%, von höchstens 20 Gew%, von höchstens 15 Gew%, von höchstens 10 Gew%, von höchstens 5 Gew% oder von höchstens 1 Gew% des Gewichts des Elektrolyten. Weiter bevorzugt ist der Elektrolyt frei von organischen Lösungsmitteln. Durch den nur geringen Anteil an organischen Lösungsmitteln oder sogar deren vollständige Abwesenheit ist der Elektrolyt entweder kaum oder gar nicht brennbar. Dies erhöht die Betriebssicherheit einer mit einem derartigen auf $SO_2$-basierenden Elektrolyten betriebenen wiederaufladbaren Batteriezelle. Besonders bevorzugt ist der auf $SO_2$-basierende Elektrolyt im Wesentlichen frei von organischen Lösungsmitteln.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:

(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes,
(iv) 0 bis 10 Gew.-% des Additivs und
(v) 0 bis 50 Gew.-% eines organischen Lösungsmittels.

**Positive Elektrode**

Nachfolgend sind vorteilhafte Weiterbildungen der erfindungsgemäßen wiederaufladbaren Batteriezelle im Hinblick auf die positive Elektrode beschrieben:
Eine vorteilhafte Weiterbildung der erfindungsgemäßen wiederaufladbaren Batteriezelle sieht vor, dass die positive Elektrode mindestens bis zu einem oberen Potenzial von 4,0 Volt, bevorzugt bis zu einem Potenzial von 4,4 Volt weiter bevorzugt von mindestens einem Potenzial von 4,8 Volt, weiter bevorzugt mindestens bis zu einem Potenzial von 5,2 Volt, weiter bevorzugt mindestens bis zu einem Potenzial von 5,6 Volt und besonders bevorzugt mindestens bis zu einem Potenzial von 6,0 Volt geladen werden kann.

Die positive Elektrode enthält in einer weiteren vorteilhaften Weiterbildung der erfindungsgemäßen wiederaufladbaren Batteriezelle mindestens ein aktives Material. Dieses kann Ionen des aktiven Metalls speichern und während des Betriebs der Batteriezelle die Ionen des aktiven Metalls abgeben und wieder aufnehmen.

Die positive Elektrode enthält in einer weiteren vorteilhaften Weiterbildung der erfindungsgemäßen wiederaufladbaren Batteriezelle zumindest eine Interkalationsverbindung. Unter dem Begriff "Interkalationsverbindung" ist im Sinne der vorliegenden Erfindung eine Unterkategorie der zuvor beschriebenen Insertionsmaterialien zu verstehen. Diese Interkalationsverbindung fungiert als Wirtsmatrix, welche Leerstellen aufweist, die untereinander verbunden sind. In diese Leerstellen können die Ionen des aktiven Metalls während des Entladevorgangs der wiederaufladbaren Batteriezelle eindiffundieren und dort eingelagert werden. Im Rahmen dieser Einlagerung der Ionen des aktiven Metalls kommt es in der Wirtsmatrix nur zu geringen oder gar keinen strukturellen Änderungen.

Die positive Elektrode enthält in einer weiteren vorteilhaften Weiterbildung der erfindungsgemäßen wiederaufladbaren Batteriezelle als aktives Material zumindest eine Umwandlungsverbindung. Unter dem Begriff "Umwandlungsverbindungen" sind im Sinne der vorliegenden Erfindung Materialien zu verstehen, die während der elektrochemischen Aktivität andere Materialien formen; d.h. während des Ladens und Entladens der Batteriezelle werden chemische Bindungen gebrochen und neu geknüpft. Während der Aufnahme oder Abgabe der Ionen des aktiven Metalls kommt es in der Matrix der Umwandlungsverbindung zu strukturellen Änderungen.

Das aktive Material weist in einer weiteren vorteilhaften Weiterbildung der erfindungsgemäßen wiederaufladbaren Batteriezelle die Zusammensetzung $A_xM'_yM''_zO_a$ auf. In dieser Zusammensetzung $A_xM'_yM''_zO_a$ ist/sind

- A mindestens ein Metall, das ausgewählt ist aus der Gruppe, die gebildet wird von den Alkalimetallen, den Erdalkalimetallen, den Metallen der Gruppe 12 des Periodensystems oder Aluminium,
- M' mindestens ein Metall, das ausgewählt ist aus der Gruppe, die gebildet wird von den Elementen Ti, V, Cr, Mn, Fe, Co, Ni, Cu und Zn;
- M" mindestens ein Element, das ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente;
- x und y unabhängig voneinander Zahlen größer 0;
- z eine Zahl größer oder gleich 0; und
- a eine Zahl größer 0.

A ist vorzugsweise das Metall Lithium oder Natrium, d.h. die Verbindung kann die Zusammensetzung $Li_xM'_yM''_zO_a$ oder $Na_xM'_yM''_zO_a$ aufweisen.

Die Indizes y und z in der Zusammensetzung $A_xM'_yM''_zO_a$ beziehen sich dabei auf die Gesamtheit der Metalle und Elemente, die durch M' bzw. M" repräsentiert werden. Umfasst zum Beispiel M' zwei Metalle $M'^1$ und $M'^2$, so gilt für den Index y: y=y1 +y2, wobei y1 und y2 die Indizes der Metalle $M'^1$ und $M'^2$ darstellen. Die Indizes x, y, z und a müssen so gewählt werden, dass eine Ladungsneutralität innerhalb der Zusammensetzung herrscht. Beispiele für Verbindungen bei denen M' zwei Metalle umfasst sind Lithiumnickelmangancobaltoxide der Zusammensetzung $Li_xNi_{y1}Mn_{y2}Co_zO_2$ mit $M'^1$=Ni, $M'^2$=Mn und M"=Co. Beispiele für Verbindungen in denen z=0 ist, die also kein weiteres Metall oder Element M" aufweisen sind Lithiumkobaltoxide $Li_xCo_yO_a$. Umfasst zum Beispiel M" zwei Elemente, zum einen ein Metall $M''^1$ und zum anderen Phosphor als $M''^2$, so gilt für den Index z: z=z1+z2, wobei z1 und z2 die Indizes des Metalls $M''^1$ und des Phosphors ($M''^2$) darstellen. Die Indizes x, y, z und a müssen so gewählt werden, dass eine Ladungsneutralität innerhalb der Zusammensetzung herrscht. Beispiele für Verbindungen bei denen A Lithium, M" ein Metall $M''^1$ und Phosphor als $M''^2$ umfasst sind Lithiumeisenmanganphosphate $Li_{x-}Fe_yMn_{z1}P_{z2}O_4$ mit A=Li, M'=Fe, $M''^1$=Mn und $M''^2$=P und z2=1. In einer weiteren Zusammensetzung kann M" zwei Nichtmetalle, zum Beispiel Fluor als $M''^1$ und Schwefel als $M''^2$, umfassen. Beispiele für solche Verbindungen sind Lithiumeisenfluorsulfate $Li_xFe_yF_{z1}S_{z2}O_4$ mit A= Li, M'=Fe, $M''_1$=F und $M''_2$=P.

Eine weitere vorteilhafte Weiterbildung der erfindungsgemäßen wiederaufladbaren Batteriezelle sieht vor, dass M' aus den Metallen Nickel und Mangan besteht und M" Cobalt ist. Es kann sich dabei um Zusammensetzungen der Formel $Li_xNi_{y1}Mn_{y2}Co_zO_2$ oder der Formel $Na_xNi_{y1}Mn_{y2}Co_zO_2$ (NMC) handeln, d.h. um Lithium- ode Natriumnickelmangancobaltoxide, die die Struktur von Schichtoxiden aufweisen. Beispiele für diese aktiven Materialien aus Lithiumnickelmangancobaltoxid sind $LiNi_{1/3}Mn_{1/3}Co_{1/3}O_2$ (NMC111), $Li\text{-}Ni_{0.6}Mn_{0.2}Co_{0.2}O_2$ (NMC622) und $LiNi_{0.8}Mn_{0.1}C0_{0.1}O_2$

(NMC811). Beispiele für diese aktiven Materialien aus Natriumnickelmangancobaltoxid sind $Na[Ni_{1/3}Mn_{1/3}Co_{1/3}]O_2$ und $Na_{0.6}[Ni_{0.25}Mn_{0.5}Co_{0.25}]O_2$. Mit diesen Verbindungen lassen sich positive Elektroden für wiederaufladbare Batteriezellen mit einer Zellspannung von über 4,6 Volt herstellen.

Eine weitere vorteilhafte Weiterbildung der erfindungsgemäßen wiederaufladbaren Batteriezelle sieht vor, dass es sich bei dem aktiven Material um ein Metalloxid handelt, welches reich an Lithium und Mangan ist (in Engl.: Lithium- and Manganese-Rich Oxide Material). Dieses Metalloxid kann die Zusammensetzung $Li_xMn_yM''_zO_a$ aufweisen. M' stellt in der oben beschriebenen Formel $Li_xM'_yM''_zO_a$ somit das Metall Mangan (Mn) dar. Der Index x ist hier größer oder gleich 1, der Index y ist größer als der Index z bzw. größer als die Summe der Indizes z1+z2+z3 etc.. Umfasst z.B. M" zwei Metalle $M''^1$ und $M''^2$ mit den Indizes z1 und z2 (z.B. $Li_{1.2}Mn_{0.525}Ni_{0.175}Co_{0.1}O_2$ mit $M''^1$=Ni z1=0,175 und $M''^2$=Co z2=0,1) so gilt für den Index y: y>z1+z2, Der Index z ist größer oder gleich 0 ist und der Index a ist größer 0. Die Indizes x, y, z und a müssen so gewählt werden, dass eine Ladungsneutralität innerhalb der Zusammensetzung herrscht. Metalloxide, welche reich an Lithium und Mangan sind, können auch durch die Formel $mLi_2MnO_3\cdot(1-m)LiM'O_2$ mit $0 < m < 1$ beschrieben werden. Beispiele für derartige Verbindungen sind $Li_{1.2}Mn_{0.525}Ni_{0.175}Co_{0.1}O_2$, $Li_{1.2}Mn_{0.6}Ni_{0.2}O_2$ oder $Li_{1.2}Ni_{0.13}Co_{0.13}Mn_{0.54}O_2$.

Eine weitere vorteilhafte Weiterbildung der erfindungsgemäßen wiederaufladbaren Batteriezelle sieht vor, dass die Zusammensetzung die Formel $A_xM'_yM''_zO_4$ aufweist. Bei diesen Verbindungen handelt es sich um Spinell-Strukturen. Zum Beispiel können A Lithium oder Natrium, M' Kobalt und M" Mangan sein. In diesem Fall handelt es sich bei dem aktiven Material um Lithiumcobaltmanganoxid ($LiCoMnO_4$) oder Natriumcobaltmanganoxid ($NaCoMnO_4$). Mit $LiCoMnO_4$ oder $NaCoMnO_4$ lassen sich positive Elektroden für wiederaufladbare Batteriezellen mit einer Zellspannung von über 4,6 Volt herstellen. In einem weiteren Beispiel können M' Nickel und M" Mangan sein. In diesem Fall handelt es sich bei dem aktiven Material um Lithium- oder Natriumnickelmanganoxid, beispielsweise um $LiNiMnO_4$. Die molaren Anteile der beiden Metalle M' und M" können variieren. Lithiumnickelmanganoxid kann zum Beispiel die Zusammensetzung $LiNi_{0,5}Mn_{1,5}O_4$ aufweisen.

Die positive Elektrode enthält als aktives Material in einer weiteren vorteilhaften Weiterbildung der erfindungsgemäßen wiederaufladbaren Batteriezelle zumindest ein aktives Material, welches eine Umwandlungsverbindung darstellt. Umwandlungsverbindungen durchlaufen während der Aufnahme des aktiven Metalls, z.B. Lithium oder Natrium, eine Festkörper-Redoxreaktion bei der sich die Kristallstruktur des Materials ändert. Dieses geschieht unter dem Aufbrechen und Rekombinieren von chemischen Bindungen. Vollständig reversible Reaktionen von Umwandlungsverbindungen können z.B. folgendermaßen lauten:

Typ A: $MX_Z + y\,Li \leftrightarrow M + z\,Li_{(y/z)}X$

Typ B: $X + y\,Li \leftrightarrow Li_yX$

Beispiele für Umwandlungsverbindungen sind $FeF_2$, $FeF_3$, $CoF_2$, $CuF_2$, $NiF_2$, $BiF_3$, $FeCl_3$, $FeCl_2$, $CoCl_2$, $NiCl_2$, $CuCl_2$, AgCl, LiCl, S, $Li_2S$, Se, $Li_2Se$, Te, I und LiI.

In einer weiteren vorteilhaften Weiterbildung weist die Verbindung die Zusammensetzung $A_xM'_yM''^1_{z1}M''^2_{z2}O_4$ auf, worin $M''^1$ ausgewählt ist aus der Gruppe, die gebildet wird von den Elementen der Gruppen 2, 3, 4, 5, 6, 7, 8, 9, 10, 11, 12, 13, 14, 15 und 16 des Periodensystems der Elemente, $M''^2$ das Element Phosphor ist, x und y unabhängig voneinander Zahlen größer 0 sind, z1 eine Zahl größer 0 ist und z2 den Wert 1 aufweist. Bei der Verbindung mit der Zusammensetzung $A_xM'_yM''^1_{z1}M''^2_{z2}O_4$ handelt es sich beispielsweise um sogenannte Lithium- oder Natriummetallphosphate. Insbesondere weisen diese Verbindungen die Zusammensetzungen $Li_xFe_yMn_{z1}P_{z2}O_4$, $LiFePO_4$, $Na_xFe_yMn_{z1}P_{z2}O_4$ oder $NaFe\text{-}PO_4$ auf. Auch Lithium- oder Natriummetallphosphate anderer Zusammensetzungen können für die erfindungsgemäße Batteriezelle verwendet werden.

Das aktive Material weist in einer weiteren vorteilhaften Weiterbildung der erfindungsgemäßen wiederaufladbaren Batteriezelle die Zusammensetzung $Na_xM'_y[Fe(CN)_6]_a \cdot nH_2O$ auf, wobei M' mindestens ein Metall ist, das ausgewählt ist aus der Gruppe bestehend aus den Elementen Ti, V, Cr, Mn, Fe, Co, Ni, Cu und Zn. Dabei kann M' zwei oder mehr Metalle $M'^1$, $M'^2$, $M'^3$ etc. sein. Dann gilt für den Index y: y=y1 +y2, wobei y1 und y2 die Indizes der Metalle $M'^1$ und $M'^2$ darstellen. n ist eine Zahl größer oder gleich Null. x, alle Indices y (y, y1, y2 etc.) und a sind unabhängig voneinander Zahlen größer 0. Bei dieser Art von Verbindungen handelt es sich um Hexacyanoferrate, auch bekannt unter den englischen Bezeichnungen "Prussian blue" und "Prussian white". Beispiele für solche Verbindungen sind $Na_2NiFe(CN)_6$, $FeFe(CN)_6 \cdot 4H_2O$, $Na_{0.61}FeFe(CN)_6$, $Na_{1.89}Mn[Fe(CN)_6]_{0.97}$ und $NaNi_{0.3}Mn_{0.7}\,Fe(CN)_6$.

Eine weitere vorteilhafte Weiterbildung der erfindungsgemäßen wiederaufladbaren Batteriezelle sieht vor, dass die positive Elektrode zumindest eine Metallverbindung enthält. Diese Metallverbindung ist ausgewählt aus der Gruppe bestehend aus einem Metalloxid, einem Metallhalogenid und einem Metallphosphat. Vorzugsweise ist das Metall dieser Metallverbindung ein Übergangsmetall der Ordnungszahlen 22 bis 28 des Periodensystems der Elemente, insbesondere Kobalt, Nickel, Mangan oder Eisen.

Eine weitere vorteilhafte Weiterbildung der erfindungsgemäßen wiederaufladbaren Batteriezelle sieht vor, dass

die positive Elektrode zumindest eine Metallverbindung enthält, die die chemische Struktur eines Spinells, eines Schichtoxids, einer Umwandlungsverbindung oder einer Polyanionischen Verbindung hat.

Es liegt im Rahmen der Erfindung, dass die positive Elektrode als aktives Material mindestens eine der beschriebenen Verbindungen oder eine Kombination der Verbindungen enthält. Unter einer Kombination der Verbindungen versteht man eine positive Elektrode, die mindestens zwei der beschriebenen Materialien enthält.

**Binder**

Eine weitere vorteilhafte Weiterbildung der erfindungsgemäßen Batteriezelle sieht vor, dass das Ableitelement der negativen Elektrode und/ oder die positive Elektrode zumindest ein Bindemittel aufweisen.

Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der negativen Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der negativen Elektrode vor.

**Aufbau der wiederaufladbaren Batteriezelle**

Nachfolgend sind vorteilhafte Weiterbildungen der erfindungsgemäßen wiederaufladbaren Batteriezelle im Hinblick auf deren Aufbau beschrieben: Um die Funktion der wiederaufladbaren Batteriezelle weiter zu verbessern, sieht eine weitere vorteilhafte Weiterbildung der erfindungsgemäßen wiederaufladbaren Batteriezelle vor, dass die wiederaufladbaren Batteriezelle mehrere negative Elektroden und mehrere positive Elektroden umfasst, die alternierend gestapelt in dem Gehäuse angeordnet sind.

Dabei kann es sich zum Beispiel um ein prismatisches Gehäuse handeln. Hierbei sind die positiven Elektroden und die negativen Elektroden vorzugsweise jeweils durch Separatorelemente voneinander elektrisch getrennt. Das Separatorelement kann im Gehäuse der wiederaufladbaren Batteriezelle auch gefaltet vorliegen, beispielsweise in Form eines sogenannten "Z-Foldings". Bei diesem Z-Folding ist ein streifenförmiges Separatorelement durch bzw. um die Elektroden z-artig gefaltet. Weiterhin kann das Separatorelement auch als Separatorpapier ausgebildet sein.

Die wiederaufladbare Batteriezelle kann jedoch auch als Wickelzelle ausgebildet sein, bei welcher die Elektroden aus dünnen Lagen bestehen, die zusammen mit einem Separatorelement aufgewickelt sind. Hier kann ein Rundgehäuse verwendet werden.

Es liegt auch im Rahmen der Erfindung, dass das Separatorelement als Umhüllung ausgebildet sein kann, wobei jede positive Elektrode oder jede negative Elektrode von der Umhüllung umhüllt ist.

Jede der beschriebenen wiederaufladbaren Batteriezellen kann ein oder mehrere komprimierbare Separatorelemente und/ oder ein oder mehrere Separatorelemente aus einem nicht komprimierbaren Material enthalten, wie es der Beschreibung in Detail zu entnehmen ist.

Weitere vorteilhafte Eigenschaften der Erfindung werden nachfolgend anhand von Figuren, Beispielen und Experimenten näher beschrieben und erläutert.

Figur 1: zeigt ein erstes Ausführungsbeispiel einer erfindungsgemäßen wiederaufladbaren Batteriezelle in einer Querschnittsdarstellung;

Figur 2a+b: zeigen eine schematische detaillierte Darstellung des komprimierbaren Ableitelements 27 und des komprimierbare Separatorelements 21 des ersten Ausführungsbeispiels aus Figur 1;

Figur 3: zeigt ein zweites Ausführungsbeispiel einer erfindungsgemäßen wiederaufladbaren Batteriezelle in einer Explosionsdarstellung;

Figur 4: zeigt ein drittes Ausführungsbeispiel der erfindungsgemäßen wiederaufladbaren Batteriezelle in einer Explosionsdarstellung;

Figur 5: zeigt den Verlauf des Ladestrom, der Spannung und der Temperatur über der Zeit während des ersten Ladezyklus einer Vollzelle die metallisches Lithium als aktives Material der negativen Elektrode enthielt

und deren Elektroden durch ein nicht-komprimierbares Separatorelement getrennt wurden;

Figur 6: zeigt ein Bild der in Figur 5 verwendeten Vollzelle, bei welcher das Gehäuse beim Laden der Vollzelle durch einen Riss beschädigt wurde;

Figur 7a: zeigt schematisch eine nicht geladene Batteriezelle mit einem Ableitelement, einem komprimierbaren Separatorelement, bestehend aus einer Polymer-Membran und einem "Non-woven" Polymer und einer Kathode. Es befindet sich kein Lithium auf dem Ableitelement; das Separatorelement befindet sich ein einem unkomprimierten Zustand;

Figur 7b: zeigt schematisch eine geladene Batteriezelle mit einem Ableitelement, einem komprimierbaren Separatorelement, bestehend aus einer Polymer-Membran und einem "Non-woven" Polymer und einer Kathode. Es befindet sich Lithium auf dem Ableitelement; das Separatorelement befindet sich in einem komprimierten Zustand;

Figur 8: zeigt die Ladekapazität in Ah und die Zykeleffizienz in % als Funktion der Zykelzahl einer Vollzelle die metallisches Lithium als aktives Material der negativen Elektrode enthielt und deren Elektroden durch ein komprimierbares Separatorelement getrennt wurden;

Figur 9: zeigt die Leitfähigkeiten in [mS/cm] der Elektrolyten 1, 4 und 6 aus Beispiel 1 in Abhängigkeit von der Konzentration der Verbindungen 1, 4 und 6; und

Figur 10: zeigt die Leitfähigkeiten in [mS/cm] des Elektrolyten 3 und 5 aus Beispiel 1 in Abhängigkeit von der Konzentration der Verbindungen 3 und 5.

Figur 1 zeigt ein erstes Ausführungsbeispiel einer erfindungsgemäßen wiederaufladbaren Batteriezelle 20 in Querschnittsdarstellung. Diese wiederaufladbare Batteriezelle 20 ist als prismatische Zelle ausgebildet und weist unter anderem ein Gehäuse 28 auf. Dieses Gehäuse 28 umschließt eine Elektrodenanordnung, die eine positive Elektrode 23 und zwei negative Elektroden 22 umfasst. Die positive Elektrode 23 und die negativen Elektroden 22 sind in der Elektrodenanordnung alternierend gestapelt angeordnet. Das Gehäuse 28 kann jedoch auch mehr positive Elektroden 23 und/oder negative Elektroden 22 aufnehmen. Generell ist es bevorzugt, wenn die Anzahl der negativen Elektroden 22 um eins größer als die Anzahl der positiven Elektroden 23 ist. Dies hat zur Folge, dass die äußeren Stirnflächen des Elektrodenstapels von den Elektrodenoberflächen der negativen Elektroden 22 gebildet werden. Die Elektroden 22, 23 sind über Elektrodenanschlüsse 29, 30 mit entsprechenden Anschlusskontakten 31, 32 der wiederaufladbaren Batteriezelle 20 verbunden. Die wiederaufladbare Batteriezelle 20 ist derart mit einem auf $SO_2$-basierenden Elektrolyten gefüllt, dass der Elektrolyt möglichst vollständig in sämtliche Poren bzw. Hohlräume eindringt. Der Elektrolyt ist in Figur 1 nicht sichtbar. Das Gehäuse 28 der wiederaufladbaren Batteriezelle 20 ist im Wesentlichen quaderförmig ausgebildet, wobei sich die Elektroden 22, 23 und die in Schnittdarstellung gezeigten Wände des Gehäuses 28 senkrecht zu der Zeichenebene erstrecken und im Wesentlichen gerade und eben geformt sind. Im vorliegenden Ausführungsbeispiel enthält die positive Elektrode 23 eine Interkalationsverbindung als aktives Material. Bei dieser Interkalationsverbindung handelt es sich um NMC811.

Die Elektroden 22, 23 sind im vorliegenden Ausführungsbeispiel flächig ausgebildet, d.h. als Schichten mit einem im Verhältnis zu ihrer Flächenausdehnung geringeren Dicke. Sie sind jeweils durch komprimierbare Separatorelemente 21 voneinander getrennt. Die positive Elektrode 23 weist ein Ableitelement 26 in Form einer planaren Metallfolie auf, auf welche das aktive Material 24 der positiven Elektrode 23 beidseitig aufgebracht ist. In dem vorliegenden Ausführungsbeispiel umfassen die negativen Elektroden 22 jeweils ein komprimierbares Ableitelement 27, auf welche das aktive Material 25 der negativen Elektrode 22 beidseitig beim Laden abgeschieden wird. Alternativ kann die Abscheidung auf den komprimierbaren Ableitelementen der Randelektroden, also der Elektroden, die den Elektrodenstapel abschließen, nur einseitig erfolgen. Die nicht-beschichtete Seite zeigt zur Wand des Gehäuses 28.

Figur 2a zeigt eine Querschnittsdarstellung des komprimierbaren Ableitelements 27 der negativen Elektrode aus Figur 1. Das komprimierbare Ableitelement 27 besteht aus einer komprimierbaren Struktur 50 und Metallbeschichtungen 51 auf beiden Seiten der komprimierbaren Struktur 50. Im vorliegenden Ausführungsbeispiel umfasst die komprimierbare Struktur eine Polypropylen-Folie mit Metallbeschichtungen aus Kupfer.

Figur 2b zeigt eine Querschnittsdarstellung des komprimierbaren Separatorelements 21 aus Figur 1. Das komprimierbare Separatorelement besteht aus einer komprimierbaren Struktur 52 und einer Polymermembran 53, an einer Seite der komprimierbaren Struktur 52. Die komprimierbare Struktur 52 und die Polymermembran 53 können miteinander fest verbunden sein oder jeweils eine eigene Einheit bilden. Im vorliegenden Ausführungsbeispiel umfasst die komprimierbare Struktur ein nichtgewebtes (non-woven) Polymervlies, welches mit einer Polymermembran aus

Polypropylen verbunden ist.

Figur 3 zeigt ein zweites Ausführungsbeispiel einer erfindungsgemäßen wiederaufladbaren Batteriezelle 40 in Explosionsdarstellung. Dieses zweite Ausführungsbeispiel unterscheidet sich von dem zuvor erläuterten Ausführungsbeispiel dadurch, dass die positive Elektrode 44 von einer Umhüllung 13 aus einem komprimierbaren Separatorelement 21 umhüllt ist. Dabei ist eine Flächenausdehnung der Umhüllung 13 größer als eine Flächenausdehnung der positiven Elektrode 44, deren Begrenzung 14 in Figur 3 als gestrichelte Linie eingezeichnet ist. Zwei, die positive Elektrode 44 beidseitig bedeckende Schichten 15, 16 der Umhüllung 13 sind am umlaufenden Rand der positiven Elektrode 44 durch eine Randverbindung 17 miteinander verbunden. Die beiden negativen Elektroden 45 sind nicht umhüllt. Die Elektroden 44 und 45 können über die Elektrodenanschlüsse 46 und 47 kontaktiert werden.

Figur 4 zeigt ein drittes Ausführungsbeispiel einer erfindungsgemäßen wiederaufladbaren Batteriezelle 101 in Explosionsdarstellung. Gezeigt sind die wesentlichen Konstruktionselemente einer Batteriezelle 101 mit einer gewickelten Elektrodenanordnung. In einem zylindrischen Gehäuse 102 mit einem Deckelteil 103 befindet sich eine Elektrodenanordnung 105, die aus einem bahnförmigen Ausgangsmaterial gewickelt ist. Die Bahn besteht aus mehreren Schichten, zu denen eine positive Elektrode, eine negative Elektrode und ein zwischen den Elektroden verlaufendes komprimierbares Separatorelement gehört, das die Elektroden elektrisch und mechanisch voneinander isoliert, jedoch ausreichend porös bzw. ionenleitend ist, um den erforderlichen Ionenaustausch zu ermöglichen. Auf diese Weise entstehen große elektrochemisch wirksame Oberflächen, die eine entsprechend hohe Stromausbeute ermöglichen. Die positive Elektrode weist ein Ableitelement in Form einer planaren Metallfolie auf, auf welche eine homogene Mischung aus dem aktiven Material der positiven Elektrode beidseitig aufgebracht ist. Im vorliegenden Ausführungsbeispiel umfasst die negative Elektrode ein komprimierbares Ableitelement, auf welches beim Laden der Batteriezelle das aktive Material der negativen Elektrode beidseitig abgeschieden wird.

Der Hohlraum des Gehäuses 102 ist, soweit er nicht von der Elektrodenanordnung 105 eingenommen wird, mit einem nicht dargestellten Elektrolyten gefüllt. Die positive und negative Elektrode der Elektrodenanordnung 105 sind über entsprechende Anschlussfahnen 106 für die positive Elektrode und 107 für die negative Elektrode mit den Anschlusskontakten 108 für die positive Elektrode und 109 für die negative Elektrode verbunden, die den elektrischen Anschluss der wiederaufladbaren Batteriezelle 101 ermöglichen. Alternativ zu dem in Figur 4 gezeigten elektrischen Anschluss der negativen Elektrode mittels der Anschlussfahne 107 und dem Anschlusskontakt 109, kann der elektrische Anschluss der negativen Elektrode auch über das Gehäuse 102 erfolgen.

Beispiel 1: Herstellung von sechs Ausführungsbeispielen 1, 2, 3, 4, 5 und 6 eines auf $SO_2$-basierenden Elektrolyten für eine Batteriezelle

Für die nachfolgend beschriebenen Experimente wurden sechs Ausführungsbeispiele 1, 2, 3, 4, 5 und 6 des auf $SO_2$-basierenden Elektrolyten hergestellt (nachfolgend bezeichnet als Elektrolyte 1, 2, 3, 4, 5 und 6). Hierfür wurden zunächst fünf unterschiedliche erste Leitsalze nach Formel (I) gemäß einem in den folgenden Dokumenten [V8], [V9], [V10] und [V11] beschriebenen Herstellungsverfahren hergestellt:

[V8] "I. Krossing, Chem. Eur. J. 2001, 7, 490;
[V9] S. M. Ivanova et al., Chem. Eur. J. 2001, 7, 503;
[V10] Tsujioka et al., J. Electrochem. Soc., 2004, 151, A1418;
[V11] Wu Xu et al., Electrochem. Solid-State Lett. 2000, 3, 366-368.

Diese sechs unterschiedlichen, ersten Leitsalze nach Formel (I) werden nachfolgend als Verbindungen 1, 2, 3, 4, 5 und 6 bezeichnet. Sie stammen aus der Familie der Polyfluoroalkoxyaluminate.

Die Verbindungen 1, 2, 3, 4 und 5 wurden gemäß folgender Reaktionsgleichungen ausgehend von $LiAlH_4$ und dem entsprechenden Alkohol R-OH mit R =$R^2$=$R^3$=$R^4$ in Hexan hergestellt (vgl. Dokumente [V8], [V9] und [V10]).

$$LiAlH_4 + 4\ HO\text{-}R \xrightarrow{\text{Hexan}} LiAl(OR)_4 + 4\ H_2$$

Der Chelatkomplex wurde ausgehend von dem entsprechenden Diol HO-R-OH gemäß einem im Dokument [V11] beschriebenen Herstellungsverfahren hergestellt.

Hierdurch wurden die nachfolgend darstellten Verbindungen 1, 2, 3, 4, 5 und 6 mit den Summen- bzw. Strukturformeln gebildet:

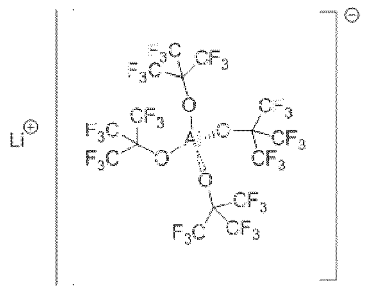

Li [Al(OC(CF )₃)₄] → $Li\ [Al(OC(CF\ )_3)_4]$

Verbindung 1

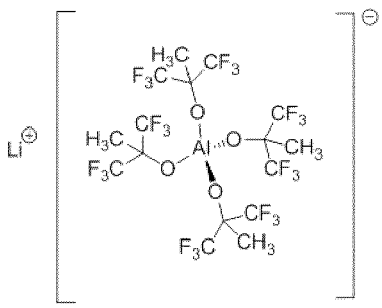

$Li\ [Al(OC(CH\ )(CF_3)_2)_4]$

Verbindung 2

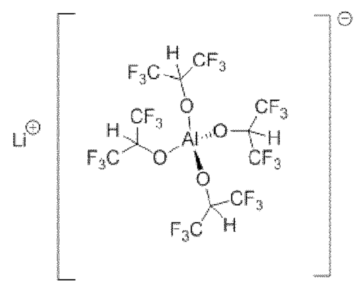

$Li\ [Al(OCH(CF\ )_2)_4]$

Verbindung 3

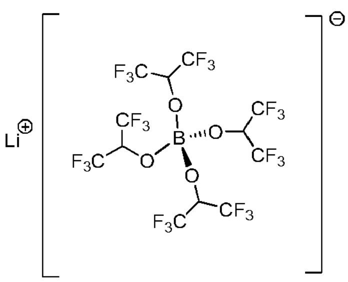

$Li[B(OCH(CF\ )_2)_4]$

Verbindung 4

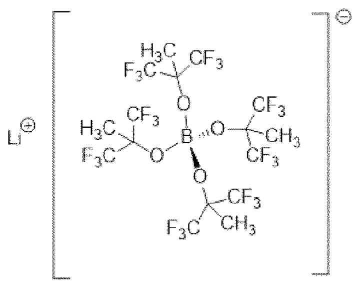

$Li\ [B(OC(CH\ )(CF_3)_2)_4]$

Verbindung 5

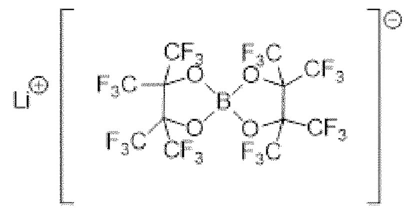

$LiB(O\ C_2(CF\ )_4)_2$

Verbindung 6

Zur Aufreinigung wurden die Verbindungen 1, 2, 3, 4, 5 und 6 zunächst umkristallisiert. Hierdurch wurden, wenn vorhanden, Reste des Edukts LiAlH aus dem ersten Leitsalz entfernt, da dieses Edukt möglicherweise mit eventuell vorhandenen Wasserspuren in $SO_2$ zur Funkenbildung führen könnte.

Danach erfolgte die Lösung der Verbindungen 1, 2, 3, 4, 5 und 6 in $SO_2$. Hierbei wurde herausgefunden, dass sich die Verbindungen 1, 2, 3, 4, 5 und 6 in SO gut lösen.

Die Herstellung der Elektrolyte 1, 2, 3, 4, 5 und 6 wurde bei Tieftemperatur oder unter Druck gemäß den nachfolgend aufgelisteten Verfahrensschritten 1 bis 4 durchgeführt:

1) Vorlage der jeweiligen Verbindung 1, 2, 3, 4,5 und 6 in jeweils einem Druckkolben mit Steigrohr,
2) Evakuieren der Druckkolben,
3) Einströmen von flüssigem $SO_2$ und
4) Wiederholung der Schritte 2 + 3 bis die Zielmenge an $SO_2$ zugegeben worden ist.

Die jeweilige Konzentration der Verbindungen 1, 2, 3, 4, 5 und 6 in den Elektrolyten 1, 2, 3, 4, 5 und 6 betrug 0,6 mol/l (Stoffmengenkonzentration bezogen auf 1 Liter des Elektrolyten), sofern in der Experimentbeschreibung nichts Anderes beschrieben ist. Mit den Elektrolyten 1, 2, 3, 4, 5 und 6 wurden die nachfolgend beschriebenen Experimente durchgeführt.

<u>Beispiel 2</u>: Herstellung von Vollzellen

Die in den nachfolgend beschriebenen Experimenten verwendeten Vollzellen sind wiederaufladbare Batterierundzellen mit einer negativen Elektrode und einer positiven Elektrode, welche durch ein Separatorelement getrennt sind. Die Elektroden mit dem Separatorelement sind gewickelt in der Rundzelle vorhanden. Das Gehäuse ist zylinderförmig. Die positiven Elektroden wiesen ein aktives Material, einen Leitfähigkeitsvermittler und ein Bindemittel auf. Das aktive Material der positiven Elektrode ist im jeweiligen Experiment benannt. Die negative Elektrode enthielt metallisches Lithium als aktives Material, welches auf dem Ableitelement der negativen Elektrode abgeschieden wurde bzw. schon vorhanden war. Welche Art von Separatorelement und Ableitelement in den Vollzellen verwendet wurden, ist im jeweiligen Experiment benannt. Die Vollzellen wurden jeweils mit dem für die Experimente benötigten Elektrolyten befüllt.

Für jedes Experiment wurden mehrere, d.h. zwei bis vier identische Vollzellen hergestellt. Die in den Experimenten vorgestellten Ergebnisse sind jeweils Mittelwerte aus den für die identischen Vollzellen erhaltenen Messwerte.

Beispiel 3: Messung in Vollzellen

Entladekapazität:

Bei Messungen in Vollzellen wird z.B. die Entladekapazität über die Zykelzahl bestimmt werden. Dazu werden die Vollzellen mit einer bestimmten Ladestromstärke bis zu einem bestimmten oberen Potential geladen. Das entsprechende obere Potential wird so lange gehalten, bis der Ladestrom auf einen bestimmten Wert abgesunken ist. Danach erfolgt die Entladung mit einer bestimmten Entladestromstärke bis zu einem bestimmten Entladepotential. Bei dieser Lademethode spricht man von einer I/U-Ladung. Dieser Vorgang wird je nach gewünschter Zykelzahl wiederholt.

Die oberen Potentiale bzw. das Entladepotential und die jeweiligen Lade- bzw. Entladestromstärken sind in den Experimenten benannt. Auch der Wert, auf den der Ladestrom abgesunken sein muss, ist in den Experimenten beschrieben.

Der Begriff "oberes Potential" wird Synonym zu den Begriffen "Ladepotential" "Ladespannung", Ladeschlussspannung" und "obere Potentialgrenze" verwendet. Die Begriffe bezeichnen die Spannung/ das Potential, bis zu welchem eine Zelle oder Batterie mit Hilfe einer Batterieladevorrichtung geladen wird.

Bevorzugt erfolgt die Ladung der Batterie mit einer Stromrate von C/2 und bei einer Temperatur von 22°C. Mit einer Lade- bzw. Entladerate von 1C wird definitionsgemäß die Nennkapazität einer Zelle in einer Stunde ge- bzw. entladen. Eine Laderate von C/2 bedeutet demnach eine Ladezeit von 2 Stunden.

Der Begriff "Entladepotential" wird Synonym zum Begriff "untere Zellspannung" verwendet. Damit wird die Spannung/ das Potential bezeichnet, bis zu welchem eine Zelle oder Batterie mit Hilfe einer Batterieladevorrichtung entladen wird.

Bevorzugt erfolgt die Entladung der Batterie mit einer Stromrate von C/2 und bei einer Temperatur von 22°C.

Die Entladekapazität wird aus dem Entladestrom und der Zeit, bis die Kriterien zur Beendigung der Entladung erfüllt sind, erhalten. Die dazugehörigen

Figuren zeigen Mittelwerte für die Entladekapazitäten als Funktion der Zykelzahl. Diese Mittelwerte der Entladekapazitäten werden jeweils in Prozent der Nennkapazität ausgedrückt.

Das Verhältnis aus der Entladekapazität $Q_{ent}$ und der Ladekapazität $Q_{lad}$ ergibt die Zykeleffizienz Z = $Q_{ent}/Q_{lad}$. Die Ladekapazität ist durch die Ladeparametern vorgegeben. Die Entladekapazität wird, wie oben beschrieben, für jeden Zyklus ermittelt. Vergleichsexperimente: Zykeln von Vollzellen mit nicht-komprimierbaren Separatorelementen im Vergleich mit Test-Vollzellen aus dem Stand der Technik (siehe [V7]) mit nicht-komprimierbaren Separatorelementen

Die in [V7] verwendeten Test-Vollzellen waren wiederaufladbare Batteriezellen mit zwei negativen Elektroden und einer positiven Elektrode in einem prismatischen Gehäuse. Nähere Angaben zu Materialien oder Zykelparameter können [V7] entnommen werden. Die Ladekapazität dieser Test-Vollzellen betrug 0,08 Ah. Das entspricht einer Flächenkapazität von 4 mAh/cm$^2$. Die Test-Vollzelle wurde mehrmals erfolgreich ge- bzw. entladen (siehe [V7] Figur 12).

Aufbauend auf den positiven Ergebnissen der Test-Vollzelle aus [V7] wurden vier gewickelte Vollzellen getestet.

Die Vollzellen sind, wie in Beispiel 2 beschrieben, Wickelzellen in einem zylindrischen Gehäuse mit einer positiven Elektrode mit Lithiumnickelmangancobaltoxid als aktives Material und einer negativen Elektrode aus metallischem Lithium, welches sich beim Laden als aktives Material beidseitig auf dem Ableitelement der negativen Elektrode abscheidet. Die Vollzellen wurden mit dem in Beispiel 1 beschriebenen Elektrolyten 1 befüllt. Die Ladekapazität der Vollzellen beträgt 7,5 Ah. Sowohl die Elektroden der Vollzellen wie auch die Elektroden der Test-Vollzellen aus [V7] wurden durch ein nicht-komprimierbares Separatorelement getrennt. (Polymer mit keramischem Coating)

Die Vollzellen wurden jeweils mit einem Ladestrom von 0,1 mA/cm$^2$ bis zu einem Potential von 4,7 Volt geladen. Die Ladekapazität von 7,5 Ah wurde jedoch überraschend bei keiner Vollzelle erreicht. Zwei Vollzellen hatten vor dem Ende der Ladung einen Kurzschluss. Bei zwei weiteren Vollzellen wurde das Gehäuse während des Ladens beschädigt. Zum Zeitpunkt des Kurzschlusses bzw. des Öffnens der Zellen wurde nur eine Flächenkapazität von ca. 2,0 - 2,5 mAh/cm$^2$ erreicht.

Figur 5 zeigt den Verlauf des Ladestroms, der Spannung und der Temperatur über der Zeit für eine Vollzelle, deren Gehäuse während des Ladens beschädigt wurde. Die Beschädigung des Gehäuses ist im Temperaturverlauf durch einen Abfall der Temperatur zu sehen.

In Figur 6 ist das durch einen Riss beschädigte Gehäuse der Vollzelle zu sehen, die dadurch nicht weiterverwendet werden konnte.

Überraschenderweise konnten die positiven Ergebnisse der prismatischen Test-Vollzelle nicht auf die zylindrische Vollzelle übertragen werden, obwohl zylindrische Gehäuse aufgrund der geometrischen Verhältnisse druckstabiler sind als prismatische Gehäuse.

Experiment 1: Berechnung der Komponenten

Für die Versuche wurde ein komprimierbares Separatorelement aus einem Composite aus einer Polymermembran und einem Polymervlies, beide aus Polypropylen, ausgewählt. Das komprimierbare Separatorelement hat in unkomprimierten Zustand eine Dicke p von 51 µm.

Figur 7 a zeigt schematisch eine Batteriezelle mit einem Ableitelement, dem komprimierbaren Separatorelement und einer Kathode. Die Batteriezelle hat die Dickenverhältnisse der einzelnen Komponenten sind kein Abbild der wahren Verhältnisse in einer Batteriezelle und nur vereinfacht dargestellt. Die Batteriezelle ist nicht geladen, es befindet sich also kein Lithium auf dem Ableitelement. Zwischen der Kathode und dem Ableitelement ist das komprimierbare Separatorelement mit der Dicke p zu sehen. In Figur 7a ist das Separatorelement nicht komprimiert.

Messungen ergaben, dass eine maximale Kompression des Separatorelements auf eine Dicke q von 25 µm möglich ist. Nach maximaler Kompression bleibt ein Zwischenraum mit einer Höhe von 26 µm.

Geplant ist eine Lithium-Abscheidung von 4 mAh/cm$^2$, das entspricht einer Abscheidedicke o von 19 µm.

Daraus berechnet sich:

$$o + q <= p$$

$$19\ \mu m + 25\ \mu m = 44\ \mu m <= 51 \mu m$$

Demnach sollte genügend Platz zur Abscheidung von 4 mAh/cm$^2$ Lithium auf dem Ableitelement vorhanden sein.

Figur 7b zeigt schematisch eine geladene Zelle, bei der Lithiummetall auf dem Ableitelement abgeschieden ist. Das komprimierbare Separatorelement ist auf die Dicke q komprimiert und stellt Platz für das Lithiummetall mit der Dicke o bereit.

Die Gesamtdicke d der Batteriezelle hat sich trotz Lithiumabscheidung aufgrund des komprimierbaren Separatorelements nicht verändert. Ein Druckaufbau innerhalb des Gehäuses ist dadurch nicht zu erwarten und eine stabiles Lade- und Entladeverhalten sollte erreicht werden.

Experiment 2: Zykeln von Vollzellen mit komprimierbarem Separatorelement

Die Vollzellen sind, wie in Beispiel 2 beschrieben, Wickelzellen mit einer positiven und einer negativen Elektrode. Die Ladekapazität dieser Vollzellen beträgt 4,00 Ah. Die Elektroden waren durch das in Experiment 1 beschriebene komprimierbare Separatorelement getrennt. Die positive Elektrode hatte Lithiumnickelmangancobaltoxid als aktives Material. Beim Laden schied sich metallischem Lithium als aktives Material beidseitig auf dem Ableitelement der negativen Elektrode ab. Die Vollzelle wurde mit dem in Beispiel 1 beschriebenen Elektrolyten 1 befüllt.

Das Laden der Vollzelle erfolgte mit einem Strom von 0,1 mA/cm$^2$ bis zu einem Potential von 4,4 Volt und bis eine Ladekapazität von 4,00 Ah erreicht war, entsprechend einer Flächenkapazität von 4 mAh/cm$^2$. Danach erfolgte die Entladung mit einem Strom von 0,5 mA/cm$^2$ bis zum Erreichen eines Potentials von 2,9 Volt.

Im Gegensatz zur Vollzelle ohne komprimierbares Separatorelement (siehe Vergleichsexperiment), die nicht vollständig geladen werden konnte, kann die Vollzelle mit komprimierbarem Separatorelement mehrmals ge- und entladen werden. Figur 8 zeigt die Ladekapazität und die Zykeleffizienz für 9 Zyklen.

Die Ladekapazität liegt bei den ersten 7 Zyklen konstant bei ca. 4,0 Ah und fällt dann etwas ab. Die Zykeleffizienz bewegt sich bei ca. 95%. Dieses sind hervorragende Ergebnisse für eine wiederaufladbare Batteriezelle. Die in Experiment 1 theoretisch berechneten Werte beschreiben die Verhältnisse in einer Vollzelle gut. Es findet kein Druckaufbau innerhalb des Gehäuses statt und eine stabiles Lade- und Entladeverhalten, wie in Figur 8 gezeigt, wird erreicht.

Experiment 3: Bestimmung von Leitfähigkeiten der Elektrolyte 1, 3, 4, 5 und 6

Zur Bestimmung der Leitfähigkeit wurden die Elektrolyte 1, 3, 4, 5 und 6 mit verschiedenen Konzentrationen der Verbindungen 1, 3, 4, 5 und 6 hergestellt. Für jede Konzentration der verschiedenen Verbindungen wurden die Leitfähigkeiten der Elektrolyte bestimmt, indem ein konduktives Messverfahren verwendet wurde. Dabei wurde nach Temperierung ein Vierelektrodensensor berührend in die Lösung gehalten und in einem Messbereich von 0,02 - 500 mS/cm gemessen.

Figur 9 zeigt die Leitfähigkeiten der Elektrolyte 1, 4 und 6 in Abhängigkeit der Konzentration der Verbindungen 1, 4 und 6. Bei Elektrolyt 1 ist ein Maximum der Leitfähigkeit bei einer Konzentration der Verbindung 1 von 0,6 mol/L - 0,7 mol/L mit einem Wert von ca. 37,9 mS/cm zu sehen. Im Vergleich dazu haben die aus dem Stand der Technik

bekannten, organischen Elektrolyte, wie z.B. LP30 (1 M LiPF6 / EC-DMC (1:1 Gew.)) eine Leitfähigkeit von nur ca. 10 mS/cm. Bei Elektrolyt 4 werden maximal 18 mS/cm bei einer Leitsalzkonzentration von 1 mol/L erreicht. Elektrolyt 6 zeigt ein Maximum von 11 mS/cm bei einer Leitsalzkonzentration von 0,6 mol/L.

Die Figur 10 zeigt die Leitfähigkeiten der Elektrolyte 3 und 5 in Abhängigkeit der Konzentration der Verbindungen 3 und 5. Bei Elektrolyt 5 werden maximal 1,3 mS/cm bei einer Leitsalzkonzentration von 0,8 mol/L erreicht. Elektrolyt 3 zeigt seine höchste Leitfähigkeit von 0,5 mS/cm bei einer Leitsalzkonzentration von 0,6 mol/L. Obwohl die Elektrolyte 3 und 5 geringere Leitfähigkeiten zeigen, ist eine Ladung bzw. Entladung einer Test-Halbzelle gut möglich.

Da der Elektrolyt 1 die beste Leitfähigkeit zeigt, wurden die Vollzellenexperimente mit diesem Elektrolyten durchgeführt. Da die Leitfähigkeiten der anderen Elektrolyte auch ausreichende Werte zeigen, ist im Verhalten von Vollzellen mit den anderen Elektrolyten z.B. in Experimenten vergleichbar Experiment 2, keine Änderung zu erwarten.

## Patentansprüche

1. Wiederaufladbare Batteriezelle (20, 40, 101), enthaltend ein aktives Metall, zumindest eine positive Elektrode (23, 44) mit einem Ableitelement (26), zumindest eine negative Elektrode (22, 45) mit einem Ableitelement (27), zumindest ein Separatorelement (21), ein Gehäuse (28, 102) und einen Elektrolyten, wobei der Elektrolyt auf $SO_2$ basiert und zumindest ein erstes Leitsalz enthält, welches die Formel (I)

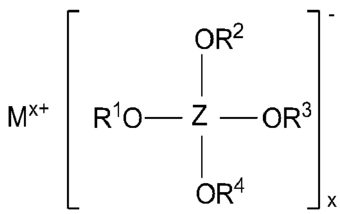

Formel (I)

aufweist, wobei

- M ein Metall ist, das ausgewählt ist aus der Gruppe bestehend aus Alkalimetallen, Erdalkalimetallen, Metallen der Gruppe 12 des Periodensystems der Elemente und Aluminium;
- x eine ganze Zahl von 1 bis 3 ist;
- die Substituenten $R^1$, $R^2$, $R^3$ und $R^4$ unabhängig voneinander ausgewählt sind aus der Gruppe bestehend aus $C_1$-$C_{10}$ Alkyl, $C_2$-$C_{10}$ Alkenyl, $C_2$-$C_{10}$ Alkinyl, $C_3$-$C_{10}$ Cycloalkyl, $C_6$-$C_{14}$ Aryl und $C_5$-$C_{14}$ Heteroaryl, wobei die aliphatischen, cyclischen, aromatischen und heteroaromatischen Gruppen unsubstituiert oder substituiert sein können;
- Z Aluminium oder Bor ist; und
- mindestens zwei der Substituenten $R^1$, $R^2$, $R^3$ und $R^4$ gemeinsam einen Chelatliganden bilden können, der an Z koordiniert ist; und

wobei die negative Elektrode (22, 45, 101) zumindest im geladenen Zustand der wiederaufladbaren Batteriezelle das aktive Metall in metallischer Form enthält; und wobei innerhalb des Gehäuses (28) ein Raum zur Aufnahme des beim Laden abgeschiedenen aktiven Metalls angeordnet ist, der durch eine komprimierbare Struktur (50, 52) gebildet ist, die durch das abgeschiedene aktive Metall komprimiert wird.

2. Wiederaufladbare Batteriezelle (20, 40, 101) nach Anspruch 1,
bei welcher die Summe aus der Dicke der abgeschiedenen Schicht des aktiven Metalls und der Dicke der komprimierten Struktur (50, 52) im komprimierten Zustand kleiner oder gleich der Dicke der komprimierbaren Struktur (50, 52) im unkomprimierten Zustand ist.

3. Wiederaufladbare Batteriezelle (20, 40, 101) nach einem der vorhergehenden Ansprüche,
bei welcher die komprimierbare Struktur (50, 52) nach der Auflösung des zuvor abgeschiedenen aktiven Metalls wieder zu ihrem unkomprimierten Zustand zurückgeht.

4. Wiederaufladbare Batteriezelle (20, 40, 101) nach einem der vorhergehenden Ansprüche,
bei welcher die komprimierbare Struktur (50, 52) durch mindestens ein Ableitelement (26, 27) und / oder durch

mindestens ein Separatorelement (21) gebildet ist.

5. Wiederaufladbare Batteriezelle (20, 40, 101) Anspruch 4, bei welcher die komprimierbare Struktur (50, 52) durch zumindest ein Separatorelement (21) gebildet ist.

6. Wiederaufladbare Batteriezelle (20, 40, 101) nach Anspruch 4 oder 5,
bei welcher das komprimierbare Separatorelement (21) eine organische Polymermembran und mindestens eine Vliesschicht aufweist.

7. Wiederaufladbare Batteriezelle (20, 40, 101) nach einem der vorhergehenden Ansprüche,
bei welcher das Ableitelement (26, 27) der negativen Elektrode (22, 45) und der positiven Elektrode (23, 44)

- entweder planar in Form eines Metallblechs oder einer Metallfolie oder
- dreidimensional in Form einer porösen Metallstruktur, insbesondere in Form eines Metallschaums (18) oder
- als komprimierbares Ableitelement

ausgebildet ist.

8. Wiederaufladbare Batteriezelle (20, 40, 101) nach Anspruch 7,
bei welcher das komprimierbare Ableitelement (26, 27) aus einem komprimierbaren Polymer ausgebildet ist, das ausgewählt ist aus der Gruppe bestehend aus Polypropylen (PP), Polyethylen (PE), Polyurethan (PU), Polystyrol (PS), Polyamid (PA), Polyethylenterephthalat (PET) oder Polyvinylidenfluorid (PVDF).

9. Wiederaufladbare Batteriezelle (20, 40, 101) nach Anspruch 8,
bei welcher das komprimierbare Polymer des Ableitelements (26, 27) einseitig oder beidseitig mit einem Metall beschichtet ist.

10. Wiederaufladbare Batteriezelle (20, 40, 101) nach Anspruch 9,
bei welcher die Beschichtung (51) Aluminium oder Kupfer aufweist.

11. Wiederaufladbare Batteriezelle (20, 40, 101) nach einem der vorhergehenden Ansprüche,
bei welcher zumindest beim ersten Laden ein Teil des metallischen aktiven Metalls mit einer Stromstärke von mindestens 3,0 $mA/cm^2$, von mindestens 3,5 $mA/cm^2$, bevorzugt von mindestens 4,0 $mA/cm^2$, weiter bevorzugt von mindestens 4,5 $mA/cm^2$, weiter bevorzugt von mindestens 5,0 $mA/cm^2$, weiter bevorzugt von mindestens 5,5 $mA/cm^2$ und besonders bevorzugt von mindestens 6,0 $mA/cm^2$ bezogen auf die einseitige Fläche der negativen Elektrode, abgeschieden wird.

12. Wiederaufladbare Batteriezelle (20, 40, 101) nach einem der vorhergehenden Ansprüche,
bei welcher der Teil des metallischen aktiven Metalls, der beim ersten Laden mit einer Stromstärke von mindestens 3 $mA/cm^2$ bezogen auf die einseitige Fläche der negativen Elektrode abgeschieden wird, mindestens 3 Gew%, bevorzugt mindestens 5 Gew%, weiter bevorzugt mindestens 10 Gew%, weiter bevorzugt mindestens 30 Gew%, weiter bevorzugt mindestens 50 Gew%, weiter bevorzugt mindestens 70 Gew%, weiter bevorzugt mindestens 90 Gew% und besonders bevorzugt mindestens 100% Gew% bezogen auf die Gesamtmenge an abgeschiedenem aktivem Metall beträgt.

13. Wiederaufladbare Batteriezelle (20, 40, 101) nach einem der vorhergehenden Ansprüche,
bei welcher sich das aktive Metall in metallischer Form schon vor dem ersten Laden der wiederaufladbaren Batteriezelle auf dem Ableitelement (26, 27) der negativen Elektrode (22, 45) befindet.

14. Wiederaufladbare Batteriezelle (20, 40, 101) nach einem der vorhergehenden Ansprüche, bei welcher das aktive Metall ausgewählt ist aus der Gruppe bestehend aus:

- einem Alkalimetall, insbesondere Lithium oder Natrium;
- eineim Erdalkalimetall, insbesondere Calcium;
- einem Metall der Gruppe 12 des Periodensystems, insbesondere Zink; oder
- Aluminium.

15. Wiederaufladbare Batteriezelle (20, 40, 101) nach einem der vorhergehenden Ansprüche,

bei welcher zumindest einer der Substituenten $R^1$, $R^2$, $R^3$ und $R^4$ des ersten Leitsalzes eine $CF_3$-Gruppe oder eine $OSO_2CF_3$-Gruppe ist.

**16.** Wiederaufladbare Batteriezelle (20, 40, 101) nach einem der vorhergehenden Ansprüche, bei welcher das erste Leitsalz ausgewählt ist aus der Gruppe bestehend aus

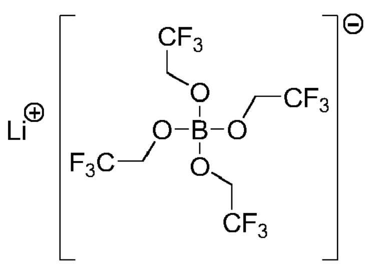

$Li[B(OCH_2CF_3)_4]$

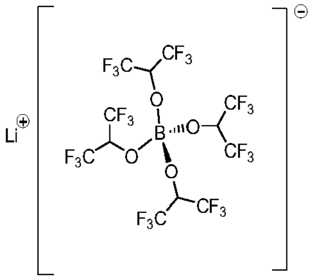

$Li[B(OCH(CF_3)_2)_4]$

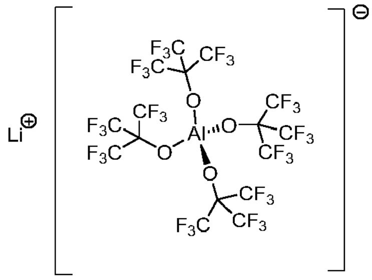

$Li[Al(OC(CF_3)_3)_4]$

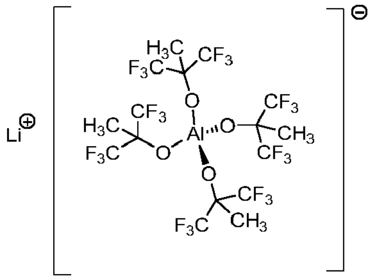

$Li[Al(OC(CH_3)(CF_3)_2)_4]$

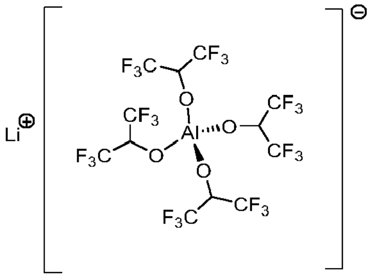

$Li[Al(OCH(CF_3)_2)_4]$.

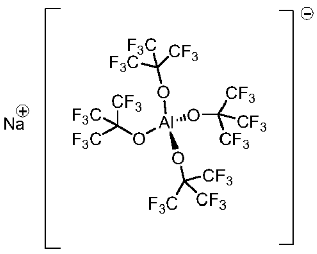

$Na[Al(OC(CF_3)_3)_4]$

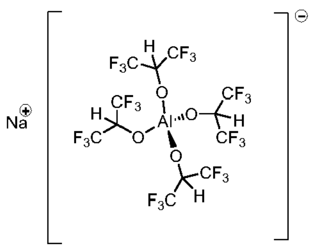

$Na[Al(OCH(CF_3)_2)_4]$

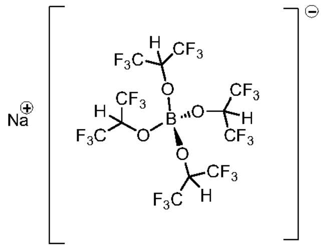

$Na[B(OCH(CF_3)_2)_4]$

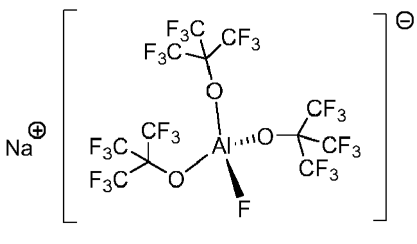

$NaAlF(OC(CF_3)_3)_3$

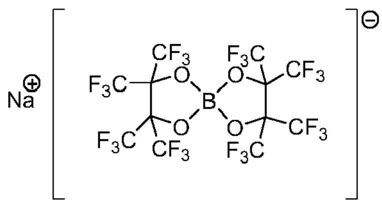

$NaB[O_2C_2(CF_3)_4]_2$

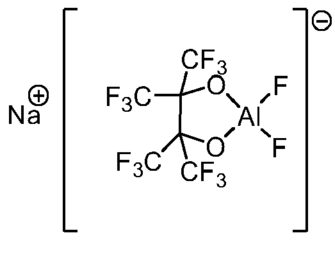

$NaAlF_2(O_2C_2(CF_3)_4)$

**17.** Wiederaufladbare Batteriezelle (20, 40, 101) nach einem der vorhergehenden Ansprüche, bei welcher das erste Leitsalz die folgende Formel

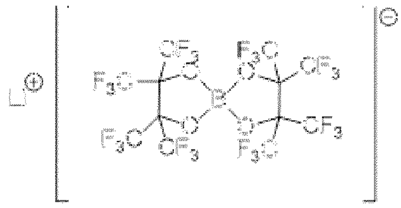

$LiB(O_2C_2(CF\ )_4)_2$

oder

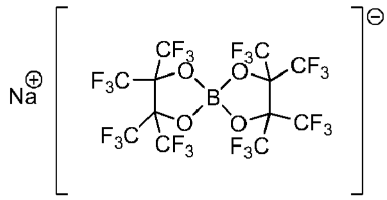

$NaB[O\ C_2(CF\ )_4]_2$

aufweist.

**18.** Wiederaufladbare Batteriezelle (2, 20, 40) nach einem der vorhergehenden Ansprüche, bei welcher der Elektrolyt die Zusammensetzung

5 bis 99,4 Gew.-% Schwefeldioxid,
0,6 bis 95 Gew.-% des ersten Leitsalzes,
0 bis 25 Gew.-% des zweiten Leitsalzes und
0 bis 10 Gew.-% des Additivs,

bezogen auf das Gesamtgewicht der Elektrolytzusammensetzung aufweist.

**19.** Wiederaufladbare Batteriezelle (2, 20, 40) nach einem der vorhergehenden Ansprüche, bei welcher die Stoffmengenkonzentration des ersten Leitsalzes im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten ist.

**20.** Wiederaufladbare Batteriezelle (2, 20, 40) nach einem der vorhergehenden Ansprüche, bei welcher der Elektrolyt mindestens 0,1 Mol $SO_2$, bevorzugt mindestens 1 Mol $SO_2$, weiter bevorzugt mindestens 5 Mol $SO_2$, weiter bevorzugt mindestens 10 Mol $SO_2$ und besonders bevorzugt mindestens 20 Mol $SO_2$ je Mol Leitsalz enthält.

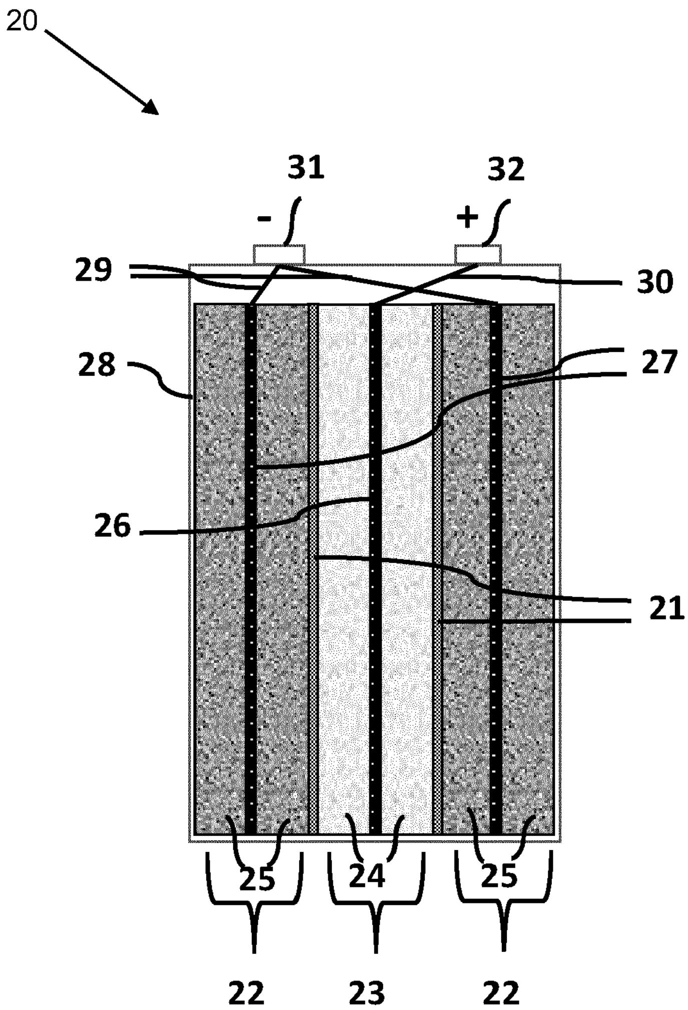


FIG. 1

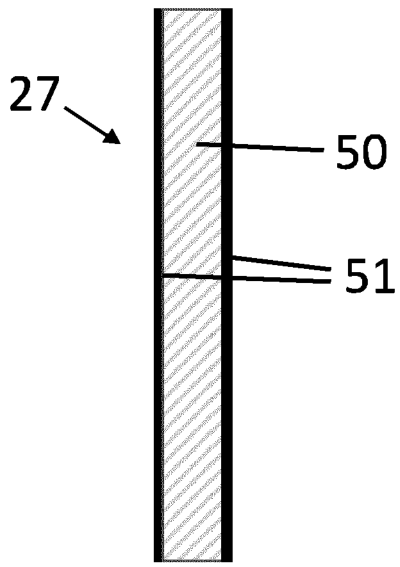


FIG. 2a

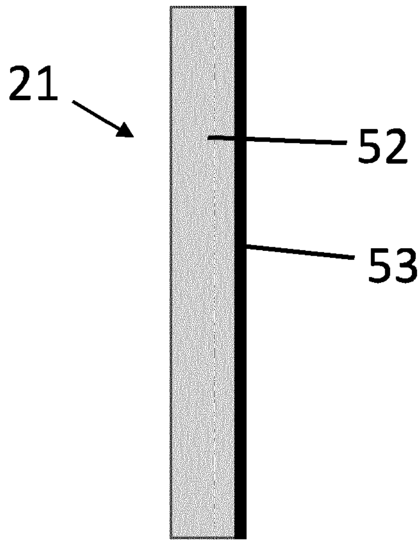


FIG. 2b

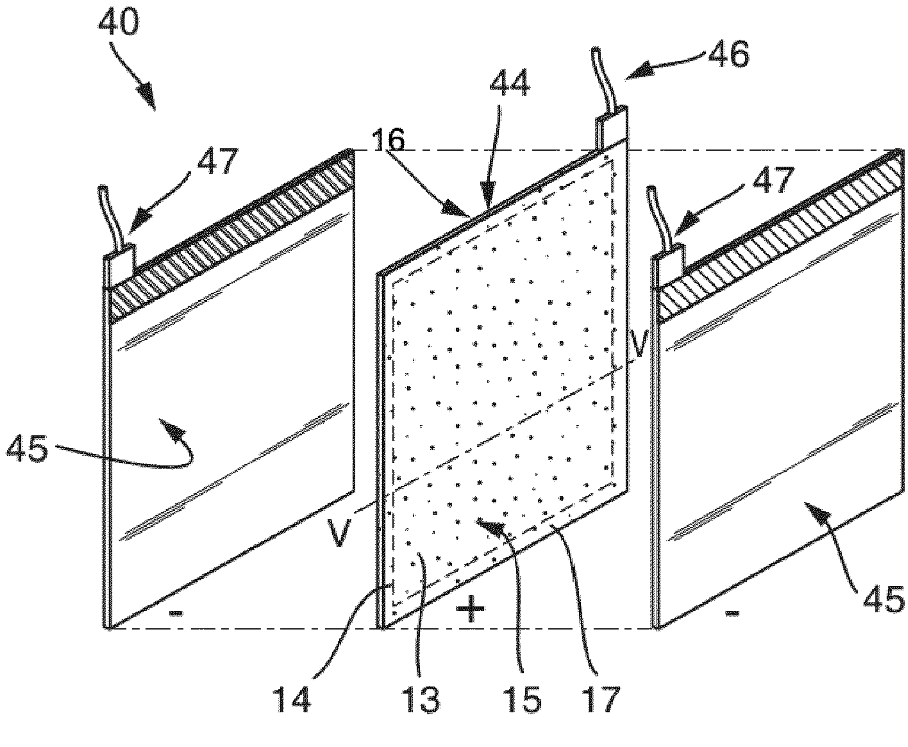


FIG. 3

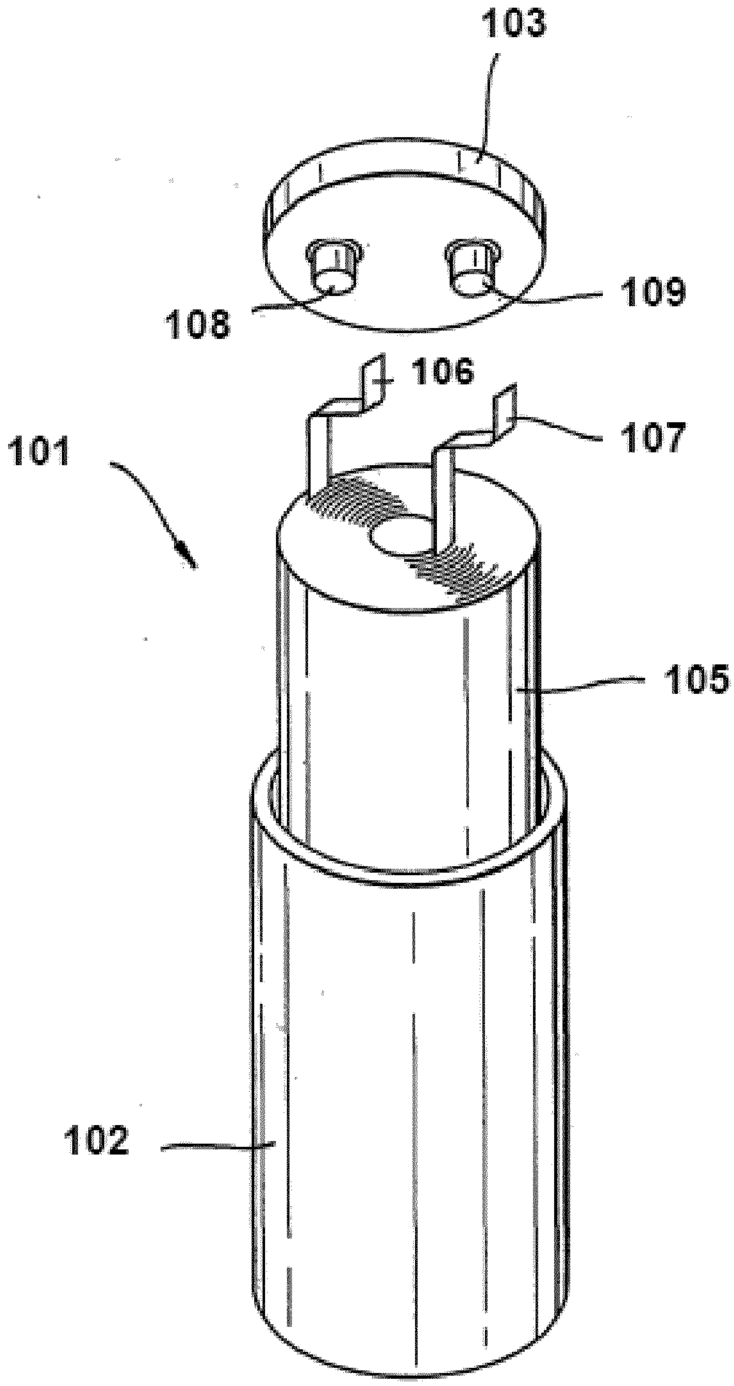


FIG. 4

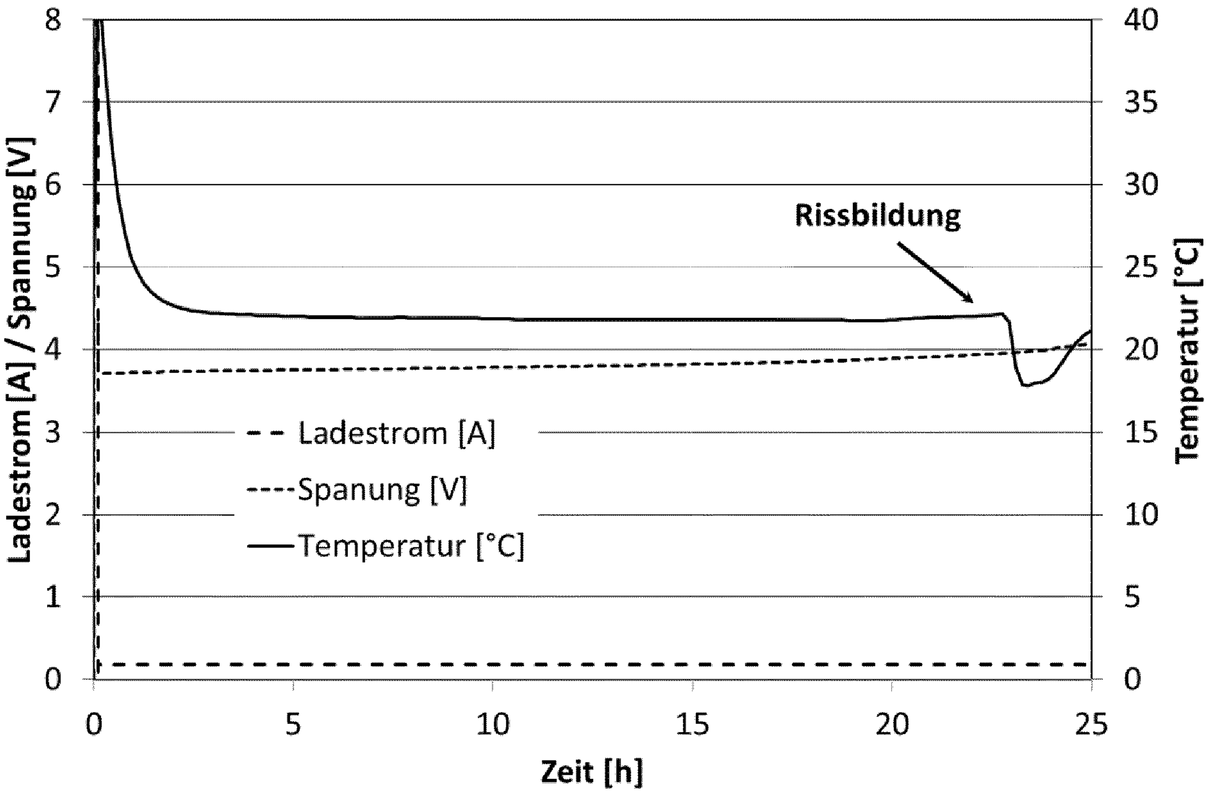
Ladestrom [A] / Spannung [V]
Temperatur [°C]
Zeit [h]
Rissbildung
Ladestrom [A]
Spanung [V]
Temperatur [°C]
0
1
2
3
4
5
6
7
8
0
5
10
15
20
25
30
35
40
0
5
10
15
20
25

FIG. 5

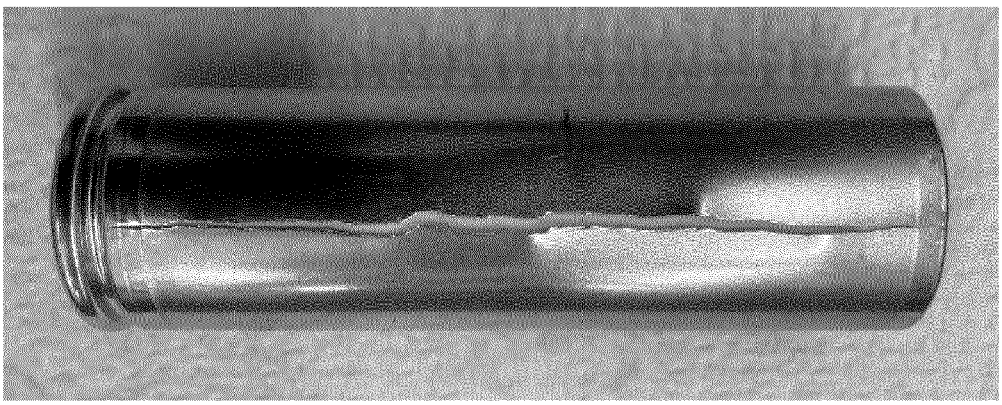

FIG. 6

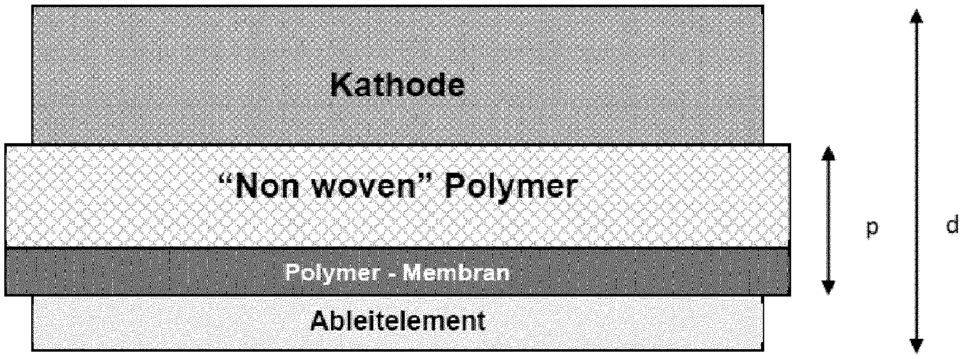


FIG. 7a

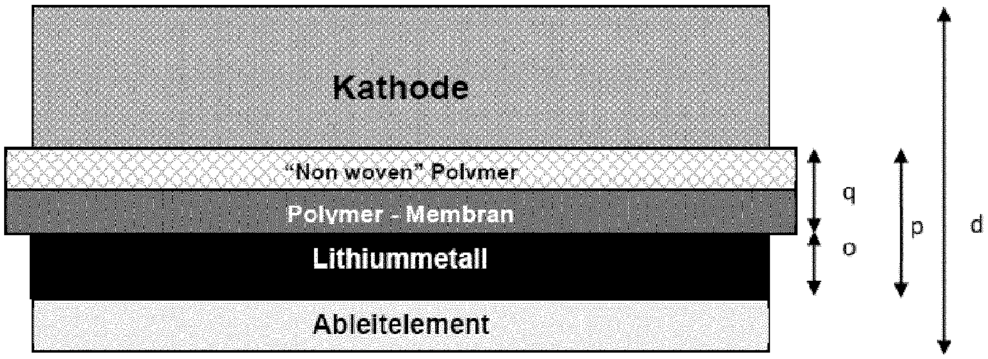


FIG. 7b

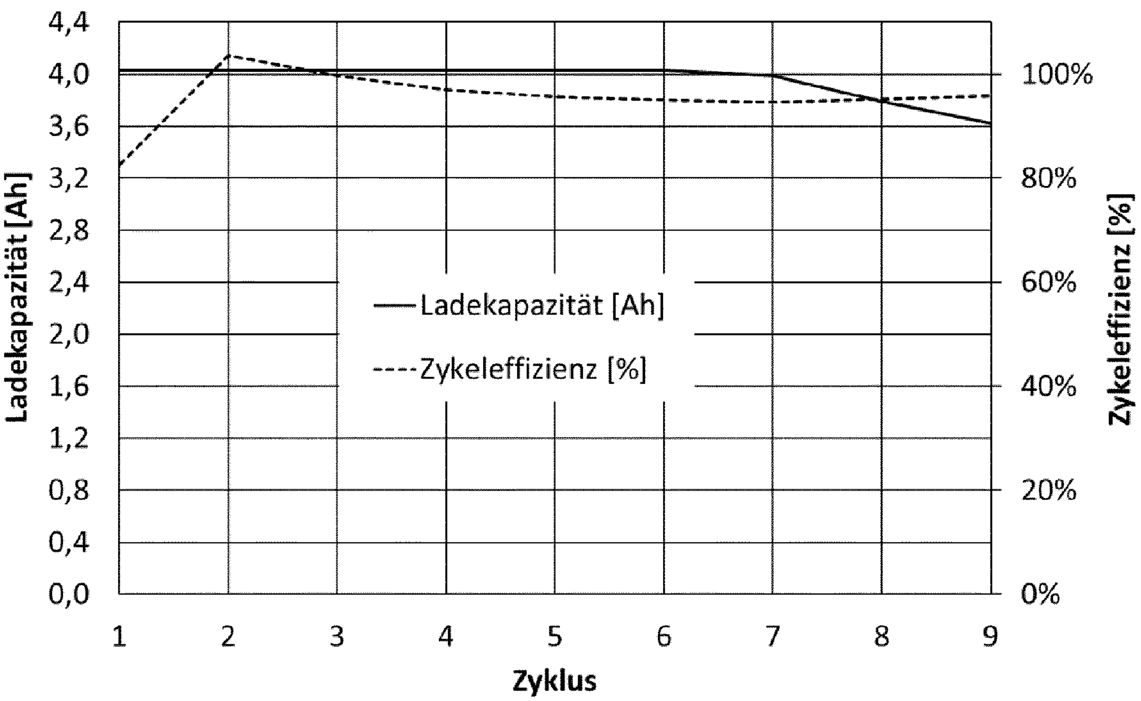


FIG. 8

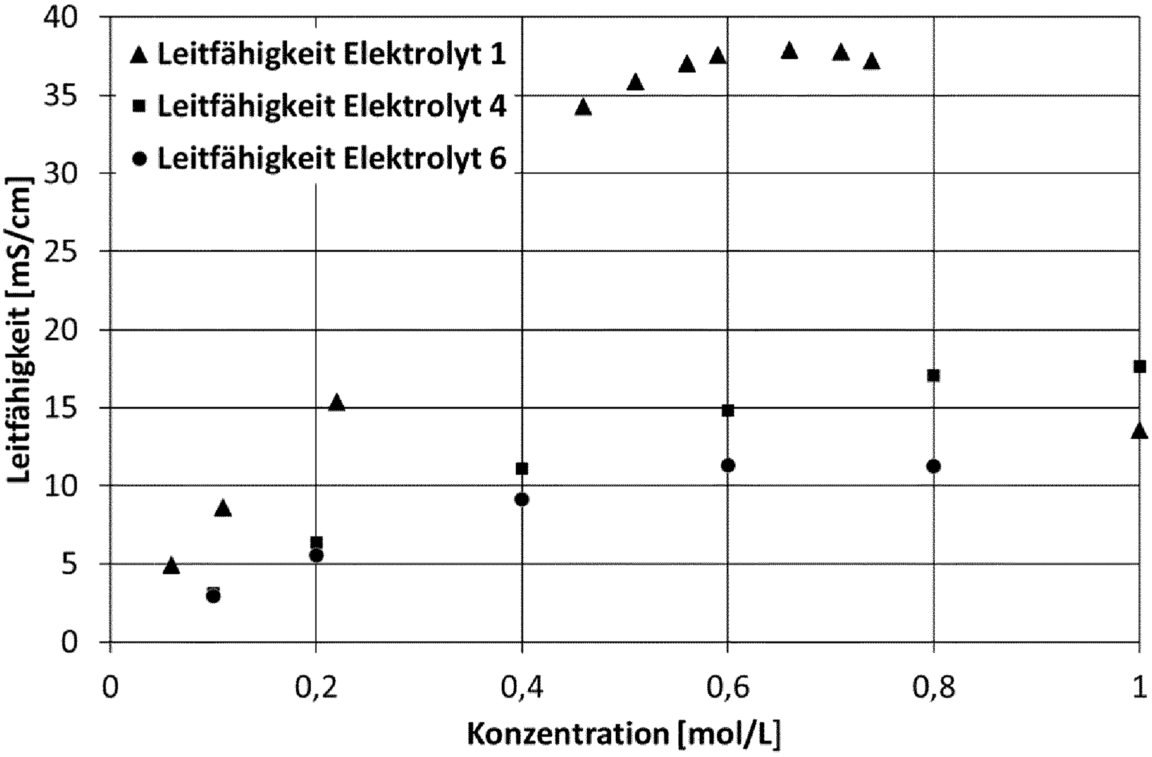
Leitfähigkeit Elektrolyt 1
Leitfähigkeit Elektrolyt 4
Leitfähigkeit Elektrolyt 6
Leitfähigkeit [mS/cm]
40
35
30
25
20
15
10
5
0
0
0,2
0,4
0,6
0,8
1
Konzentration [mol/L]

FIG. 9

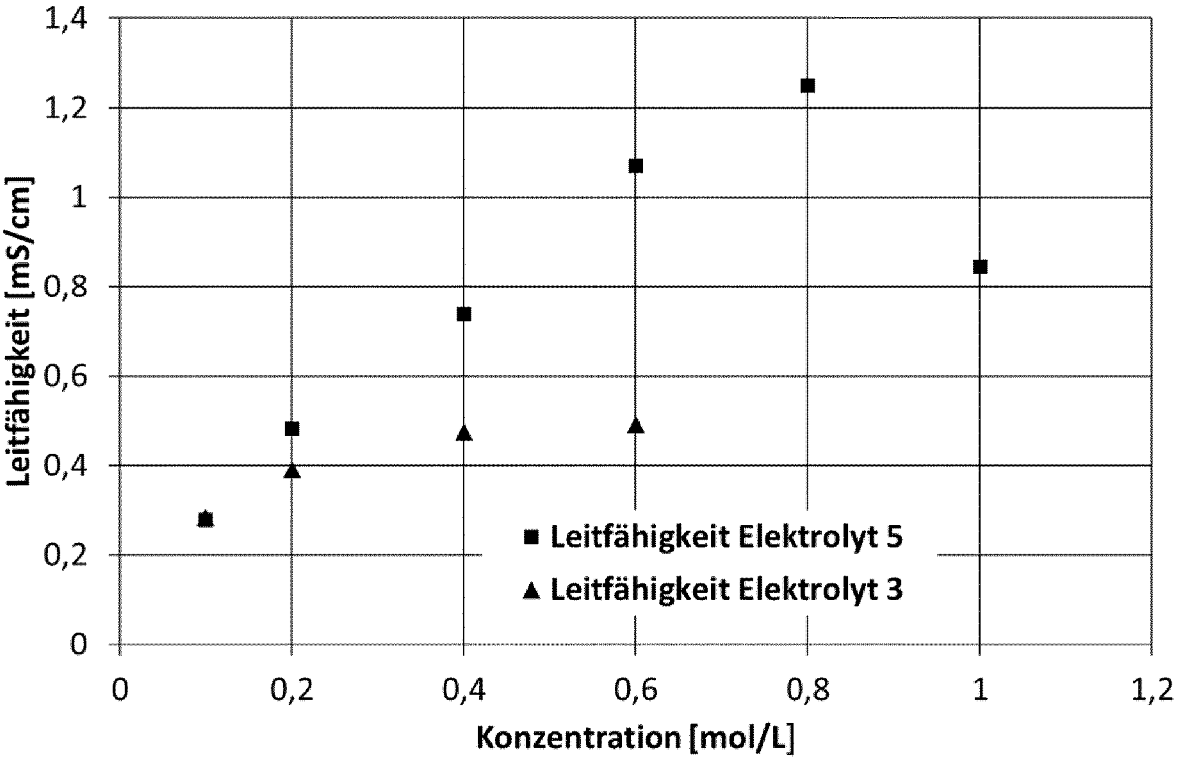
Leitfähigkeit Elektrolyt 5
Leitfähigkeit Elektrolyt 3
Leitfähigkeit [mS/cm]
1,4
1,2
1
0,8
0,6
0,4
0,2
0
0
0,2
0,4
0,6
0,8
1
1,2
Konzentration [mol/L]

FIG. 10

Europäisches Patentamt
European Patent Office
Office européen des brevets

# EUROPÄISCHER RECHERCHENBERICHT

Nummer der Anmeldung
EP 21 21 5537

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 3 794 666 A1 (INNOLITH TECHNOLOGY AG) 24. März 2021 (2021-03-24)<br>* Absatz [0021] - Absatz [0024] *<br>* Absatz [0031] - Absatz [0037] *<br>* Absatz [0040] - Absatz [0041] *<br>* Absatz [0043] - Absatz [0051] *<br>* Absatz [0055] - Absatz [0061] *<br>* Absatz [0080] - Absatz [0081] *<br>* Beispiele 2-4 *<br>* Ansprüche 1-5, 13-16, 22-24 *<br>----- | 1-20 | INV.<br>H01M4/38<br>H01M4/66<br>H01M10/052<br>H01M10/0563<br>H01M10/0568<br>H01M50/417<br>H01M50/449<br><br>ADD.<br>H01M4/74<br>H01M4/80<br>H01M10/054<br>H01M10/44 |
| A,D | WO 03/061036 A2 (FORTU BAT BATTERIEN GMBH) 24. Juli 2003 (2003-07-24)<br>* Seite 1, Zeile 13 - Seite 2, Zeile 8 *<br>* Seite 3, Zeile 18 - Seite 4, Zeile 3 *<br>* Seite 6, Zeile 14 - Seite 7, Zeile 7 *<br>* Seite 11, Zeile 12 - Seite 12, Zeile 2; Abbildung 1 *<br>* Ansprüche 1, 5, 19-21 *<br>----- | 1-20 | |
| A,D | C. W. PARK ET AL: "Performances of Li/LixCoO2 cells in LiAlCl4.3SO2 electrolyte", JOURNAL OF POWER SOURCES, Bd. 68, Nr. 2, 1. Oktober 1997 (1997-10-01), Seiten 338-343, XP005496930, ISSN: 0378-7753, DOI: 10.1016/S0378-7753(97)02518-4<br>* das ganze Dokument *<br>-----<br>-/-- | 1-20 | RECHERCHIERTE SACHGEBIETE (IPC)<br>H01M |

Der vorliegende Recherchenbericht wurde für alle Patentansprüche erstellt

1

| Recherchenort | Abschlußdatum der Recherche | Prüfer |
|---|---|---|
| München | 13. Juni 2022 | Masson, Jean-Pierre |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 21 21 5537

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2021/057795 A1 (UCHICAGO ARGONNE, LLC) 25. Februar 2021 (2021-02-25)<br>* Absatz [0006] - Absatz [0007] *<br>* Absatz [0019] - Absatz [0022] *<br>* Absatz [0024] *<br>* Absatz [0028] - Absatz [0030] *<br>* Absatz [0032] - Absatz [0033] *<br>* Ansprüche 1-4, 7-9 *<br>----- | 1-20 | |
| A,D | JP 4 306858 B2 (SANYO ELECTRIC CO., LTD.) 5. August 2009 (2009-08-05)<br>* Zusammenfassung *<br>* Absatz [0030]; Beispiele 1, 5-13; Tabelle 1 *<br>* Ansprüche 1, 2 *<br>----- | 1-20 | |
| A,D | JP 2001 143750 A (CENTRAL GLASS CO., LTD.) 25. Mai 2001 (2001-05-25)<br>* Zusammenfassung *<br>* Absatz [0010] - Absatz [0011] *<br>* Beispiele 1-6 *<br>* Ansprüche 1-4 *<br>----- | 1-20 | RECHERCHIERTE SACHGEBIETE (IPC) |

1 Der vorliegende Recherchenbericht wurde für alle Patentansprüche erstellt

| Recherchenort | Abschlußdatum der Recherche | Prüfer |
|---|---|---|
| München | 13. Juni 2022 | Masson, Jean-Pierre |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 21 21 5537

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-06-2022

| Im Recherchenbericht angeführtes Patentdokument | Datum der Veröffentlichung | Mitglied(er) der Patentfamilie | Datum der Veröffentlichung |
|---|---|---|---|
| EP 3794666 A1 | 24-03-2021 | AU 2020319679 A1 | 23-12-2021 |
| | | AU 2020319847 A1 | 23-12-2021 |
| | | AU 2020320033 A1 | 16-12-2021 |
| | | AU 2020321601 A1 | 23-12-2021 |
| | | AU 2020322166 A1 | 23-12-2021 |
| | | AU 2020323712 A1 | 23-12-2021 |
| | | BR 112021022989 A2 | 08-02-2022 |
| | | BR 112021022996 A2 | 12-04-2022 |
| | | BR 112021022999 A2 | 12-04-2022 |
| | | BR 112021023001 A2 | 08-02-2022 |
| | | BR 112021023003 A2 | 08-02-2022 |
| | | BR 112021023657 A2 | 08-02-2022 |
| | | CA 3139798 A1 | 04-02-2021 |
| | | CA 3139800 A1 | 04-02-2021 |
| | | CA 3139803 A1 | 04-02-2021 |
| | | CA 3139807 A1 | 04-02-2021 |
| | | CA 3139843 A1 | 04-02-2021 |
| | | CA 3141137 A1 | 04-02-2021 |
| | | CN 113196541 A | 30-07-2021 |
| | | CN 113196542 A | 30-07-2021 |
| | | CN 113196543 A | 30-07-2021 |
| | | CN 113273000 A | 17-08-2021 |
| | | CN 113348578 A | 03-09-2021 |
| | | CN 113348579 A | 03-09-2021 |
| | | DK 3772129 T3 | 26-07-2021 |
| | | DK 3794666 T3 | 28-02-2022 |
| | | EP 3772129 A1 | 03-02-2021 |
| | | EP 3791437 A1 | 17-03-2021 |
| | | EP 3794663 A1 | 24-03-2021 |
| | | EP 3794664 A1 | 24-03-2021 |
| | | EP 3794665 A1 | 24-03-2021 |
| | | EP 3794666 A1 | 24-03-2021 |
| | | ES 2884936 T3 | 13-12-2021 |
| | | ES 2902219 T3 | 25-03-2022 |
| | | ES 2902452 T3 | 28-03-2022 |
| | | ES 2902968 T3 | 30-03-2022 |
| | | ES 2906730 T3 | 20-04-2022 |
| | | ES 2908086 T3 | 27-04-2022 |
| | | HU E055324 T2 | 29-11-2021 |
| | | HU E057151 T2 | 28-04-2022 |
| | | HU E057443 T2 | 28-05-2022 |
| | | HU E057612 T2 | 28-05-2022 |
| | | KR 20220007083 A | 18-01-2022 |
| | | KR 20220007868 A | 19-01-2022 |
| | | KR 20220007869 A | 19-01-2022 |
| | | KR 20220007870 A | 19-01-2022 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 21 21 5537

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-06-2022

| Im Recherchenbericht angeführtes Patentdokument | Datum der Veröffentlichung | Mitglied(er) der Patentfamilie | Datum der Veröffentlichung |
|---|---|---|---|
| | | KR 20220008288 A | 20-01-2022 |
| | | KR 20220011137 A | 27-01-2022 |
| | | PL 3772129 T3 | 27-09-2021 |
| | | PL 3791437 T3 | 21-02-2022 |
| | | PL 3794663 T3 | 19-04-2022 |
| | | PL 3794664 T3 | 14-02-2022 |
| | | PL 3794665 T3 | 14-02-2022 |
| | | PL 3794666 T3 | 19-04-2022 |
| | | US 2021036358 A1 | 04-02-2021 |
| | | US 2022077461 A1 | 10-03-2022 |
| | | US 2022077494 A1 | 10-03-2022 |
| | | US 2022077511 A1 | 10-03-2022 |
| | | US 2022085408 A1 | 17-03-2022 |
| | | US 2022085409 A1 | 17-03-2022 |
| | | WO 2021019041 A1 | 04-02-2021 |
| | | WO 2021019042 A1 | 04-02-2021 |
| | | WO 2021019043 A1 | 04-02-2021 |
| | | WO 2021019044 A1 | 04-02-2021 |
| | | WO 2021019045 A1 | 04-02-2021 |
| | | WO 2021019047 A1 | 04-02-2021 |
| WO 03061036 A2 | 24-07-2003 | AU 2003205523 A1 | 30-07-2003 |
| | | DE 10201936 A1 | 31-07-2003 |
| | | EP 1481430 A2 | 01-12-2004 |
| | | JP 4589627 B2 | 01-12-2010 |
| | | JP 2005515601 A | 26-05-2005 |
| | | US 2005106467 A1 | 19-05-2005 |
| | | WO 03061036 A2 | 24-07-2003 |
| US 2021057795 A1 | 25-02-2021 | KEINE | |
| JP 4306858 B2 | 05-08-2009 | JP 4306858 B2 | 05-08-2009 |
| | | JP 2000243437 A | 08-09-2000 |
| JP 2001143750 A | 25-05-2001 | JP 3463926 B2 | 05-11-2003 |
| | | JP 2001143750 A | 25-05-2001 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 4306858 B
- JP 2001143750 A
- US 7901811 B2
- WO 2021019047 A1


### In der Beschreibung aufgeführte Nicht-Patentliteratur


- **CHENG et al.** Dendrite-Free Lithium Deposition Induced by Uniformly Distributed Lithium Ions for Efficient Lithium Metal Batteries. *Adv. Mater.,* 2016, vol. 28, 2888-2895
- **SUN et al.** Design Strategies to Enable the Efficient Use of Sodium Metal Anodes in High-Energy Batteries. *Adv. Mater.,* 2020, vol. 32, 1903891
- **OH et al.** *JOURNAL OF POWER SOURCES,* 01. Oktober 1997, vol. 68 (2), 338-343
- **I. KROSSING.** *Chem. Eur. J.,* 2001, vol. 7, 490
- **S. M. IVANOVA et al.** *Chem. Eur. J.,* 2001, vol. 7, 503
- **TSUJIOKA et al.** *J. Electrochem. Soc.,* 2004, vol. 151, A1418
- **WU XU et al.** *Electrochem. Solid-State Lett.,* 2000, vol. 3, 366-368